# EUROPÄISCHE PATENTSCHRIFT

(11) **EP 0 743 892 B1**
(45) Veröffentlichungstag und Bekanntmachung des Hinweises auf die Patenterteilung: **22.09.1999**
(21) Anmeldenummer: 95908876.6
(22) Anmeldetag: 08.02.1995
(51) Int. Cl.: B29B 17/02, B03B 9/06, H01B 15/00, C08J 11/08

(54) **VERFAHREN UND VORRICHTUNG ZUM VERWERTEN VON KUNSTSTOFFBESCHICHTETEN ODER -UMHÜLLTEN KABELRESTEN UND KABELSCHROTT ZUM GETRENNTEN WIEDERGEWINNEN VON METALL UND SORTENREINEM, RECYCELBAREM KUNSTSTOFF**
PROCESS AND DEVICE FOR MAKING USE OF PLASTIC-COATED OR SHEATHED WIRING AND WASTE WIRE FOR THE SEPARATE RECOVERY OF METAL AND PURE RECYCLABLE PLASTIC
PROCEDE ET DISPOSITIF D'UTILISATION DE RESIDUS DE CABLES RECOUVERTS OU ENROBES DE PLASTIQUE POUR RECUPERER SEPAREMENT LE METAL ET LE PLASTIQUE PUR ET RECYCLABLE

(30) Priorität: 08.02.1994 DE 4403856; 19.11.1994 DE 4441229
(43) Veröffentlichungstag der Anmeldung: 27.11.1996
(73) Patentinhaber: Drzevitzky, Bernd, D-68165 Mannheim (DE)
(72) Erfinder: DRZEVITZKY, Bernd, D-68165 Mannheim (DE); WALKE, Hans, Jürgen, D-61381 Friedrichsdorf (DE); LEITZKE, Hartmut, D-69502 Hemsbach (DE)
(74) Vertreter: Mierswa, Klaus, Dipl.-Ing.
(86) Internationale Anmeldenummer: DE9500158
(87) Internationale Veröffentlichungsnummer: WO9521732

(56) Entgegenhaltungen:
- EP-A- 0 156 144
- WO-A-83/02281
- WO-A-94/12565
- DE-A- 3 340 273
- DE-A- 3 512 965
- DE-A- 4 119 303

## Beschreibung

### Technisches Gebiet:

Die Erfindung betrifft ein Verfahren zum Verwerten von kunststoffbeschichteten oder kunststoffumhüllten Kabelresten und Kabelschrott zum getrennten Wiedergewinnen von Metall und sortenreinem, recycelbarem Kunststoff, bei welchem die in den Kabeln enthaltenen Metallteile von der Umhüllung getrennt und die Metalle wiedergewonnen werden und die Kunststoffe so aufbereitet werden, daß sie als metallfreies Recyclat sortenrein einer Wiederverwendung als Reinkunststoff mit den Werkstoffeigenschaften eines Neukunststoffes zuführbar sind.

### Stand der Technik:

Kabel als elektrische Leiter bestehen generell aus einer metallischen Kabelseele aus einem oder mehreren Strängen, die vorwiegend aus Kupfer oder Aluminium bestehen und einem oder mehreren Kabelmänteln, die in der Regel aus Polyvinylchlorid (PVC) gefertigt sind, wobei die einzelnen Metallstränge auch getrennt umhüllt sein können. Zur Rückgewinnung des hochwertigen Kupfers oder Aluminiums aus Kabelresten und Kabelschrott ist es bekannt, die Kunststoffummantelung bei hohen Temperaturen zu verschwelen oder zu verbrennen, so daß die Metallseele übrigbleibt. Bei der Verschwelung von Kunststoffen, insbesondere von PVC, entstehen jedoch äußerst schädliche, giftige Abgase, deren Umweltbelastung vom Gesetzgeber nicht mehr toleriert wird. Die Vernichtung des wertvollen Kunststoffes ist ein weiteres, nicht erwünschtes Ergebnis dieses Verfahrens.

Weit verbreitet sind zwischenzeitlich Verfahren, bei denen Kabelreste bzw. Kabelschrott soweit zerkleinert wird, daß die entstehende Partikelgröße keinen mechanischen Zusammenhalt zwischen Metall und Kunststoff mehr zuläßt. Durch die DE 35 29 322 A1, auf deren Inhalt der Oberbegriff der vorliegenden unabhängigen Ansprüche 1 und 16 beruht, ist beispielsweise ein derartiges Verfahren zur Verwertung von isolierten Kabelabfällen bekanntgeworden, bei denen die Kabelreste durch eine Zerkleinerungsmaschine zu kleinen Teilchen geschnitten werden, so daß bereits eine weitgehende Zerlegung von Metall und Isoliermaterial erfolgt. Durch ein Gebläse wird das zerkleinerte Material in eine Trennanlage gefördert, welches mittels Wasserspülung das Material sortiert. Das getrennte Material wird in einem Überlaufbecken gesammelt und das Wasser gleichzeitig wieder als Versorgung einer Pumpe mit den daran angeschlossenen Düsen benützt, womit die unterschiedlichen Dichten von Metall und Kunststoff zur Trennung genutzt werden.

Im Stand der Technik werden Reinheitsgrade beim Trennen von 0,5 bis 5 % Kunststoff im Metall und ca. 1 bis 5 % Metall im Kunststoff erzielt. Das Wiedereinschmelzen der Metallfraktion ist völlig unproblematisch, während die Kunststoff-Fraktion als Recyclat weitgehend unbrauchbar ist. Sie stellt in aller Regel ein unkontrolliertes Gemisch sehr verschiedener Kunststoffe dar und kann im 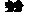 Downcycling" nur für Produkte niederer Qualität eingesetzt werden, für die der Markt weitgehend gesättigt ist, weshalb letztlich nur die kostenintensive und umweltschädliche Deponierung der Kunststoffabfälle verbleibt. Auf der Deponie oder beim Einschmelzen der Kunststoffabfälle wirken insbesondere Kupfer und Kupfersalze als Katalysator für die Bildung von Dioxinen. Es muß deshalb die Trennung von Metall und Kunststoff aus Kabelschrott mit oder ohne anschließende Verarbeitung der Kunststoffabfälle nach dem Stand der Technik als sehr problematisch angesehen werden.

Durch die DE 1 963 148 ist ein Verfahren und eine Vorrichtung zum Trennen des Kunststoffisolationsmaterials von Metalleitern bekanntgeworden, bei dem die Leitungen ebenfalls zuerst in Stücke geschnitten werden, worauf diese Stücke in ein Bad einer erwärmten, die Isolierung nicht chemisch lösenden Flüssigkeit eingetaucht werden, wonach die Leitungsstücke in der erwärmten Flüssigkeit einer die aufgeweichte Isolierung von den Leiterstücken ablösenden Schlagbeanspruchung ausgesetzt werden solange, bis sich die Mantelwerkstoffe vom Metall abgelöst haben. Danach wird die gesamte Charge in einen Trennbehälter mit zwei verschiedenen Flüssigkeiten umgefüllt, die sich nicht miteinander mischen oder ineinander lösen dürfen. Der Trennvorgang geschieht in der Weise, daß die Metallpartikel in der zweiten Flüssigkeit, die die Trennflüssigkeit darstellt, absinken, während die Kunststoffpartikel auf der Trennflüssigkeit aufschwimmen und sich damit in der Phasengrenzfläche zwischen beiden Flüssigkeiten sammeln und somit separiert werden können. Dieses Verfahren stellt somit einen diskontinuierlichen Prozeß dar.

Weil jedoch kein organisches Lösungsmittel existiert, das nicht in einem anderen organischen Lösungsmittel lösbar oder vermischbar ist, verbleibt als zweite Trennflüssigkeit für technisch realisierbare Möglichkeiten nur Wasser, in dem soviel Salze gelöst sind, daß seine Dichte größer als die der abzuscheidenden Kunststoffe ist. Während des Quellvorganges werden als Weichmacher verwendete Phtalsäureverbindungen aus dem Kunststoff gelöst, die sich beim Kontakt mit Wasser darin lösen bzw. in Suspension gehen. Da sich das Wasser im Prozeßverlauf durch Verunreinigungen verbraucht, ist es nach Gebrauch zu regenerieren. Eine saubere Trennung der gelösten Salze und der aus dem Kunststoff stammenden Verunreinigungen ist technisch schwierig und sehr kostenaufwendig. Die Abgabe an das Abwasser ist in Deutschland gegenwärtig kaum genehmigungsfähig.

Des weiteren ist durch die DE 33 40 273 A1 ein Verfahren und eine Vorrichtung zur Verwertung von kunststoffbeschichteten Kabelresten bekanntgeworden, bei dem die Kabelreste in ein Bad eingegeben werden, das ein flüssiges Quellmittel enthält, welches die Kunststoffteile aufquellen läßt und brüchig macht. Anschließend an den Quellvorgang werden die Kabelreste einer Waschstation zugeführt und mit scharfen Strahlen aus Sprühdüsen besprüht, wobei die Kunststoffmäntel der Kabelreste durch den Strahldruck zertrümmert werden. Die Kunststoffteile werden durch eine Trennvorrichtung von den Metallteilen getrennt.

### Technische Aufgabe:

Der Erfindung liegt die Aufgabe zugrunde, zur Rückgewinnung der Metallseele aus Kabelresten und Kabelschrott, die vorzugsweise aus hochwertigem Elektrolytkupfer oder Aluminium besteht, und der die Ummantelung bildenden Kunststoffe von Kabelresten und Kabelschrott ein Verfahren und eine Vorrichtung der eingangs genannten Gattung zu schaffen, welches eine einwandfreie Trennung der Metallseele von der Kunststoffummantelung gewährleistet, wobei sowohl die Metalle wie auch die Kunststoffe in reiner Form sortenrein wiedergewonnen werden sollen, wobei bei der Duchführung des Verfahrens keine Verunreinigungen in die Atmosphäre oder in das Grundwassers austreten sollen und alle beteiligten Wirkstoffe aufbereitet und wiederverwendet werden sollen.

Ein Hauptziel besteht in der Rückgewinnung eines Kunststoffrecyclats, das neuwertigem Kunststoff gleicher Art in seinen Werkstoffeigenschaften gleicht.

Zur Lösung der gestellten Aufgabe offenbart die Erfindung ein Verfahren gemäß Anspruch 1.

Eine erfindungsgemäße Vorrichtung zur Durchführung des Verfahrens ist in Anspruch 16 gekennzeichnet. Weitere vorteilhafte Ausgestaltungen der Erfindung sind in den Unteransprüchen gekennzeichnet.

Kurzbeschreibung der Zeichnung, in der zeigen:
- Figur 1: ein Grundfließbild des erfindungsgemäßen Verfahrens
- Figur 2: den ersten Teil einer technischen Anlage zur Durchführung des Verfahrens bis zu den Leitungen Buchstaben A, B und C
- Figur 3: den zweiten Teil der Anlage mit der Weiterführung der Leitungen A, B, C bis zu den Leitungen D, E, F, G, H, I, K
- Figur 4: den dritten Teil der Anlage mit der Weiterführung der Leitungen D,E,F,G,H,J,K bis zu den Leitungen L,M ,P,N, O
- Figur 5: den vierten Teil der Anlage mit der Weiterführung der Leitungen L,M,P,N,O bis zu den Leitungen J, K, I, G
- Figur 6: einen Querschnitt durch eine Walzenkegelmühle der Erfindung
- Figur 7: eine Ansicht eines Doppelarmrührwerkes mit gekrümmten Rotorarmen und Statorarmen
- Figur 8: eine Ansicht eines Metallsedimentators und
- Figur 9: eine Ansicht eines Kunststoffsedimentators.

### Wege zur Ausführung der Erfindung:

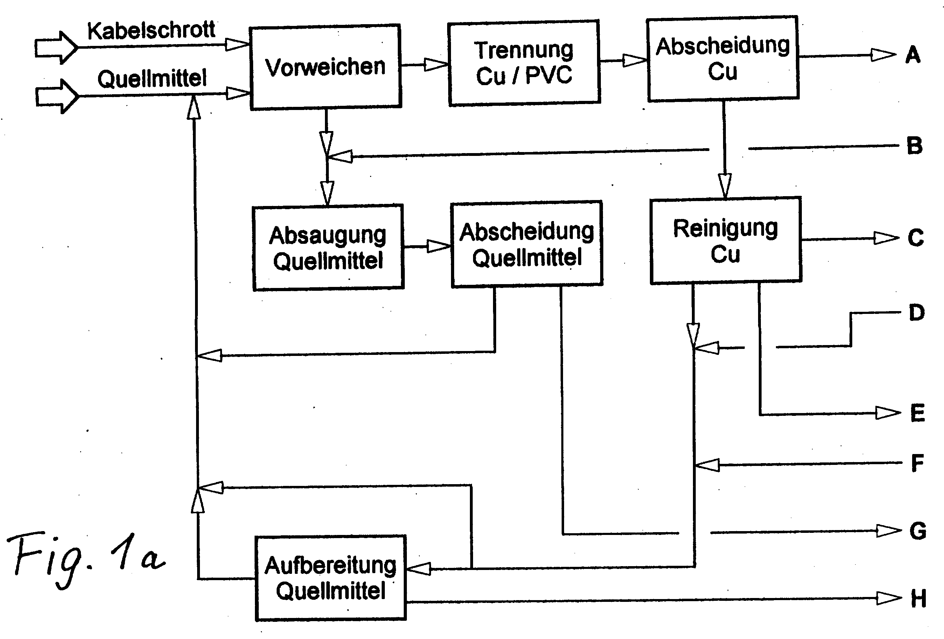

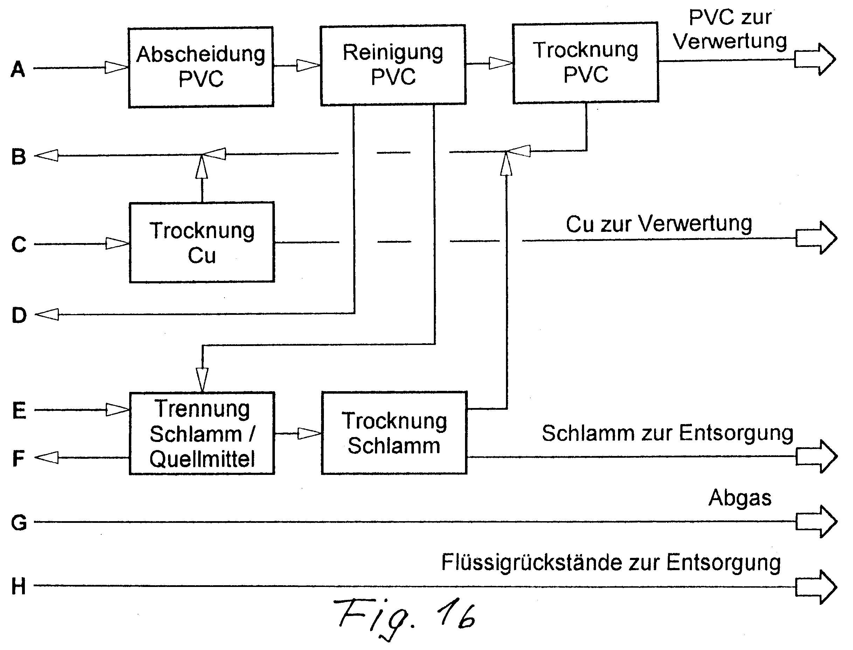

Gemäß dem Grundfließbild der Figur 1 wird der Kabelschrott in Form von kleingeschnittenem Häckselgut von wenigen Zentimetern Länge mitsamt einem Quell- und/oder Lösungsmittel in die Station 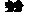 VORWEICHEN" gebracht, nach der in der Station 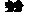 TRENNUNG CU/PVC" eine Trennung des Metalls, vorzugsweise Kupfer, vom aufgeweichten bzw. aufgequollenen Kunststoff, vorzugsweise PVC, erfolgt. In der folgenden Station 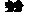 ABSCHEIDUNG CU" erfolgt die Abscheidung des Metalls vom Kunststoff, wonach das Metall in der Station 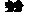 REINIGUNG CU" gereinigt und in der folgenden Station 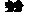 TROCKNUNG" getrocknet und zur Verwertung geführt wird. In der folgenden Station 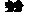 ABSCHEIDUNG PVC" erfolgt die Abscheidung des Kunst-stoffes, der danach in der Station 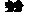 REINIGUNG PVC" gereinigt und in der Station 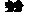 TROCKNUNG PVC" getrocknet und einer Verwertung zugeführt wird.

Aus der Station 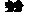 REINIGUNG CU" wird in der Station 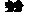 TRENNUNG SCHLAMM/QUELLMITTEL" der Schlamm und das Quellmittel getrennt und anschließend in der Station 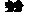 TROCKNUNG SCHLAMM" der Schlamm getrocknet und einer Entsorgung zugeführt.

Sowohl aus den Stationen 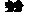 REINIGUNG CU", REINIGUNG PVC", 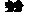 TROCKNUNG PVC", 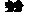 TROCKNUNG CU" als auch 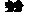 TROCKNUNG SCHLAMM" wird das Quellmittel einer Station 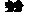 ABSAUGUNG QUELL-MITTEL" sowie nachfolgend der Station 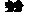 ABSCHEIDUNG QUELLMITTEL" zugeführt, wonach das Quellmittel wieder in die Station 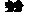 VORWEICHEN" aufgegeben werden kann. Falls es notwendig ist, wird das Quellmittel in der Station 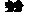 AUFBEREITUNG QUELLMITTEL" aufbereitet und dann wiederum dem Kreislauf in die Station 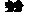 VORWEICHEN" zugeführt. Gleichermaßen kann aus der Station 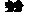 REINIGUNG CU" das Quellmittel entweder der Station 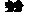 AUFBEREITUNG QUELLMITTEL" oder direkt wiederum dem Verarbeitungszyklus zugeführt werden. Eventuelle Flüssigrückstände aus der Station 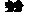 AUFBEREITUNG QUELLMITTEL" werden ebenfalls einer Entsorgung zugeführt.

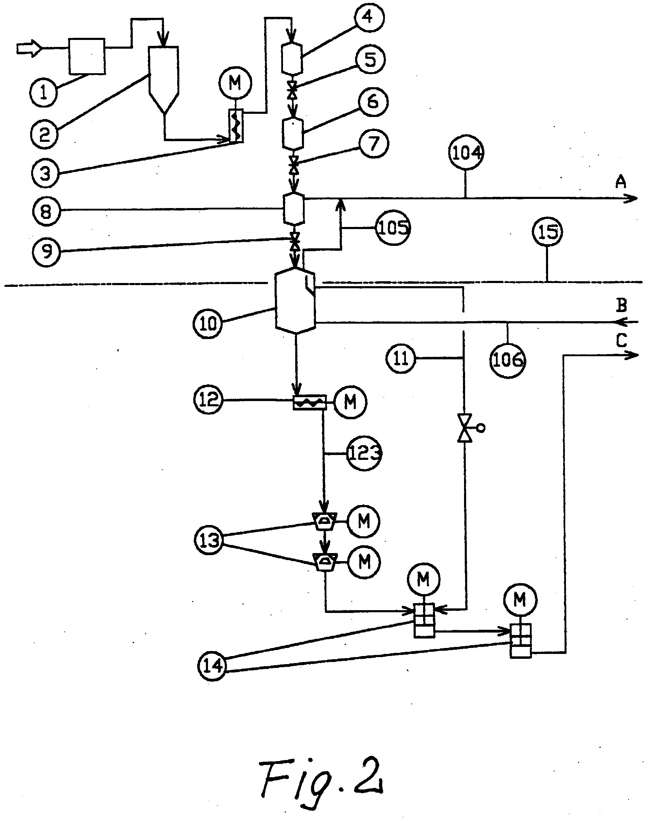

In den nachfolgenden Figuren 2 bis 5 ist ein vollständiges Verfahrensfließbild des erfindungsgemäßen Verfahrens anhand der Aufbereitung für Kupfer-Kabelschrott mit PVC- Kunststoffummantelungen dargestellt, wobei die Darstellung fortlaufend auf die Figuren 2 bis 5 aufgeteilt ist.

In einer Vorbereitungsstation 1 erfolgt die Vorsortierung der Kabel, wobei dickadrige Starkstromkabel, Kabel mit Stahlmänteln, Ölkabel und Kabel mit Umhüllungen, die offensichtlich nicht aus PVC bestehen, vorher aussortiert und nach dem Stand der Technik bearbeitet werden. Dabei anfallende PVC-Bestandteile dieser Kabel werden zerkleinert und dem nachfolgend beschriebenen Prozeß zugeführt. Eine geringfügige Menge fehlsortierter Kabel, die nicht größer als 10 % liegen sollte, kann von dem erfindungsgemäßen Verfahren bzw. der Vorrichtung toleriert werden. Zur Aufbereitung der Kabelreste und des Kabelschrotts werden diese in Häcksel von wenigen Zentimetern Länge geschnitten und in einen Häckselbunker 2 gefördert, der so dimensioniert sein sollte , daß mit der darin gelagerten Menge vorzugsweise ein 24-stündiger Prozeßablauf gewährleistet ist. Der Häckselbunker 2 ist vorzugsweise trichterförmig, wobei sich an seinem unteren Ende eine Förderschnecke 3 befindet, die einen kontinuierlichen Massenstrom an Kabelhäcksel zur Versorgung der Anlage erzeugt und diesen auf eine Höhe über den Flüssigkeitsspiegel 15 des verwendeten Lösungsmittels in der Anlage fördert. Durch die Förderschnecke 3 wird der Förderstrom in einen Sammelbehälter 4 gelenkt, der die Eingangsstation für ein abgeschiebertes, gasdichtes Kammersystem bildet. Alle folgenden Komponenten der verfahrenstechnischen Anlage sind technisch gasdicht gekapselt.

Dem Sammelbehälter 4 sind in Reihe zwei Schleusenkammern 6 und 8 nachgeordnet, zwischen denen sich jeweils Schieber 5, 7 und 9 befinden, wobei der Schieber 9 der Schleusenkammer 8 nachgeordnet ist. Ist durch Schieberbetätigung des der Schleusenkammer 6 nachgeordneten Schiebers 7 dieselbe leer geworden, wird der Schieber 7 geschlossen und der Schieber 5 nach dem Sammelbehälter 4 und vor der Schleusenkammer 6 geöffnet. Nach Schließen des Schiebers 7 kann der Schieber 9 geöffnet werden, wobei sich nunmehr die Schleusenkammer 8 leert. Die Schleusenkammer 8 ist durch eine Gasleitung 104 mit der Leitung für Lösungsmitteldämpfe A verbunden, um einen Austritt von Lösungsmitteldämpfen in die Umwelt zu verhindern. In der Leitung 104 (A) für die Lösungsmitteldämpfe wird in geregelter Weise ein geringer Unterdruck eingestellt. Durch Betätigung des Schiebers 9 fallen die Kabelhäcksel in einen Quellbehälter 10, der ein Lösungsmittelbad aus Dichlormethan oder einem anderen geeigneten organischen Lösungsmittel enthält, welches die Kunststoffummantelungen der Kabelhäcksel aufquillt, jedoch weder auflöst bzw. ablöst noch diese in ihrer chemischen Struktur wandelt. Der Quellbehälter 10 ist so bemessen, daß die Kabelhäcksel mindestens solange darin verweilen, wie es zum hinreichenden Aufquellen des Kunststoffs nötig ist. Er ist so gestaltet, daß ihn die Kabelhäcksel in einem gleichmäßigen Strom von oben nach unten passieren können. Der Flüssigkeitsspiegel 15 innerhalb des Quellbehälters 10 befindet sich ca. in 3/4 der Behälterhöhe. Der freie Rum des Quellbehälters 10, der sich oberhalb des Flüssigkeitsspiegels 15 befindet, ist über eine Leitung 105 mit der Leitung 104 für die Lösungsmitteldämpfe A verbunden. Hierbei sorgt ein geringer Unterdruck dafür, daß keine Lösungsmitteldämpfe imitiert werden können. Im unteren Bereich des Quellbehälters 10 ist eine Rückflußleitung 106 für das Lösungsmittel (B) aus der Anlage angeschlossen.

Der Quellbehälter 10 kann so dimensioniert sein, daß er das 1,5-fache Volumen des stündlichen Durchsatzes an Häckselgut unter der Oberfläche der Quellflüssigkeit aufzunehmen vermag. Zusätzlich kann der Quellbehälter 10 einen ausreichend dimensionierten Dampfraum enthalten, dessen Absolutdruck unter 950 mbar gehalten wird.

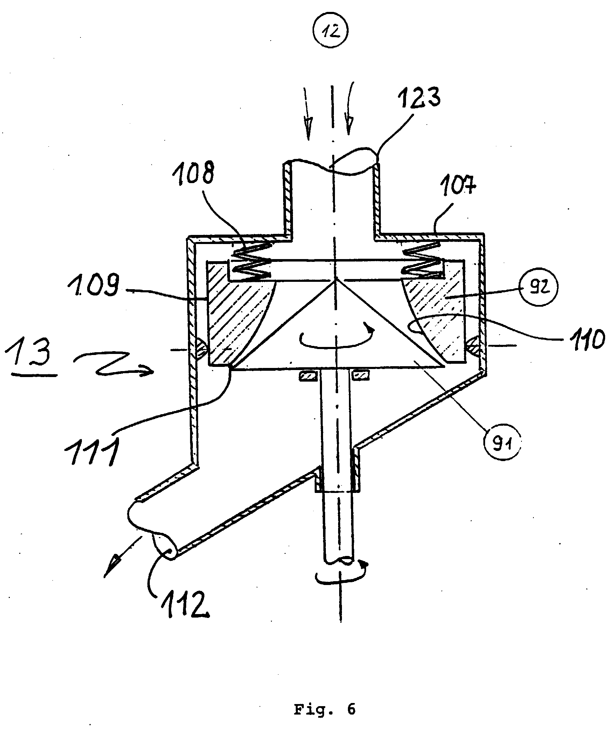

Eine nach dem unteren Ende oder im unteren Ende des Quellbehälters 10 angeordnete Förderschnecke 12 gewährleistet den erforderlichen absolut kontinuierlichen Massenstrom gequollener Kabelhäcksel in Schüttdichte zu einer oder mehreren hintereinandergeschalteten Walzenkegelmühlen 13, deren Gestaltung im einzelnen in Figur 6 gezeigt ist. Wesentlich ist, daß das vorhandene gequollene Gemisch in der Schüttdichte, die nur soviel Lösungsmittel enthält, wie freier Raum in der Schüttung gegeben ist, in die erste Walzenkegelmühle 13 gefördert wird. Hierin wird das Gut definiert so gewalkt, daß eine gleichmäßige Zerstörung des vorhandenen Kunststoffmantels die Folge ist. Dieser beschriebene Vorgang erfolgt kontinuierlich.

Statt einer Förderschnecke 12 kann am Ausgang des Quellbehälters 10 eine Zellradschleuse angeordnet sein, die einen kontinuierlichen Massestrom an Häckselgut erzeugt und dieses in die nachfolgenden Anlageteile fördert.

Die Gestaltung der Walzenkegelmühle 13 ist in Figur 6 dargestellt. Die Walzenkegelmühle 13 besteht aus einem im Prinzip zylindrischen Gehäuse 107, in welches vorzugsweise von oben die Leitung 123 aus der Förderschnecke 12 einmündet. Innerhalb des Gehäuses 107 ist ein Walkkegel 91 drehbar um eine Achse angeordnet, die motorisch angetrieben ist. Auf den Walkkegel 91 ist von oben eine Kulisse 92 aufgesetzt, die mittels Federn 108 federbelastet auf den Walkkegel 91 gedrückt ist, so daß die Spitze des Walkkegels in die Kulisse 92 ragt. Die Kulisse 92 besteht im Prinzip aus einem Ring, der mit seiner äußeren, umlaufenden Mantelwandung 109 beweglich auf und ab im oberen Teil des Gehäuses 107 der Walzenkegelmühle 13 gelagert ist, wie es in Figur 6 gezeigt ist. Die innere, umlaufende Manteloberfläche 110 der Kulisse 92 ist konvex gekrümmt und bildet mit der kegelförmigen Oberfläche des Walkkegels 91 einen nach außen bin enger werdenden, umlaufenden Spalt 111 aus. Die Walzenkegelmühle 13 ist so konstruiert, daß sie die gequollenen Kunststoffmäntel unabhängig vom Durchmesser der durchlaufenden Kabelhäcksel in radiale Position zum Walkkegel 91 ordnet und beim Abdrehen aufgrund der Drehung des Walkkegels 91 gegen die federnd gelagerte Kulisse 92 so walkt, daß die Kunststoffmäntel aufgebrochen und die Drahtseelen gelockert werden, jedoch ohne die Kunststoffmäntel oder die Drahtseelen zu zerreiben.

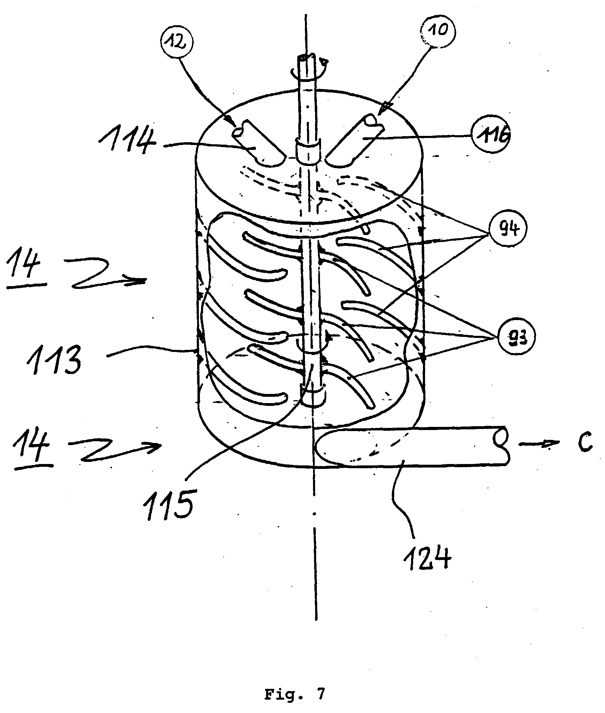

Die gewalkten Kabelhäcksel verlassen durch die Schwerkraft das Gehäuse 107 der Walzenkegelmühle 13 am unteren Ausgang 112 und werden in nachgeordnete ein- oder mehrstufige Doppelarmrührwerke 14 gefördert, die in Figur 7 dargestellt und anschließend beschrieben sind. Unterhalb des Flüssigkeitsspiegels 15 des Quellbehälters 10 mündet in denselben eine Bypaßleitung 11 mit Durchflußregelung, die zumindest an das erste Doppelarmrührwerk 14 angeschlossen ist, um für eine geregelte Flüssigkeitsversorgung der Doppelarmrührwerke 14 mit Quellflüssigkeit zu sorgen.

Ein derartiges Doppelarmrührwerk 14 besteht im Prinzip aus einem zylindrischen Behälter 113 mit den oberen Einlässen 114, 116. Innerhalb des Behälters sind spiralig oder tordiert gekrümmte, feststehende Statorarme 94 angeordnet, die vorzugsweise über die Höhe und über den Umfang des Behälters 113 gleichmäßig verteilt sind. Innerhalb des Behälters 113 ist drehbar eine Achse 115 in Richtung der Längsachse des Behälters 113 angeordnet, wobei an der Achse 115 spiral oder tordiert gekrümmte Rotorarme 93 angeordnet sind, die bei Drehung der Achse 115 zwischen den Statorarmen 94 hindurchzulaufen imstande sind, wie es in Figur 7 gezeigt ist. Die Doppelarmrührwerke 14 haben im Prinzip drei Funktionen. Sie sind so dimensioniert und werden mit einer solchen Drehzahl betrieben, daß die durchgehenden, gequollenen Kabelhäcksel nach dem Walken mit einer so großen Anzahl von Impulsen definierter Größe beaufschlagt werden, daß sich die Metallseelen vom aufgequollenen Kunststoff sauber trennen und die Kunststoffpartikel gleichzeitig von Metallabrieben freigewaschen werden. Gleichzeitig wird auf der Saugseite über die Bypaßleitung 11 (Figur 2) geregelt Volumenstrom an freiem Lösungsmittel zudosiert, der notwendig ist, um sämtliche Feststoffpartikel, nämlich Metalldrähte und Kunststoffpartikel, ohne Sedimentationswirkung durch die Leitung C, das ist der Ausgang 124 des letzten Doppelarmrührwerkes 14, den nachgeordneten Anlagenteilen zuleiten zu können. Der Ausgang 124 kann ein spiralig auslaufender Auslaß 124 sein. Die Pumpwirkung der Doppelarmrührwerke 14 beruht auf der Druckerhöhung infolge der Rotation des Fördergutes. Das Gehäuse 113 ist zusammen mit der Anordnung der Zulauf- und Ablaufstutzen 114, 116 so konstruiert, daß einerseits die passierenden Partikel, nämlich Kunststoff und Metall, die erforderlichen Mindestwege zurücklegen, andererseits jedoch trotz der Bremswirkung der Statorstäbe 94 die Rotationsbewegung des Fördergutes noch so hoch ist, daß eine ausreichende Druckerhöhung für erforderliche Pumpwirkung erreicht wird.

Diese Pumpwirkung muß so bemessen sein, daß die in der Leitung C erreichte Geschwindigkeit des entstehenden Dreiphasengemisches volle Trubulenz zum Mitreißen aller Feststoffanteile gewährleistet.

Statt der Doppelarmrührwerke 14 können auch andere mechanische Trennwerke zum Einsatz gelangen, wie zum Beispiel Kreuzrührwerke, die ebenfalls durch Strömungskräfte und mechanische Impulse den gequollenen Kunststoff endgültig vom Kupfer trennen.

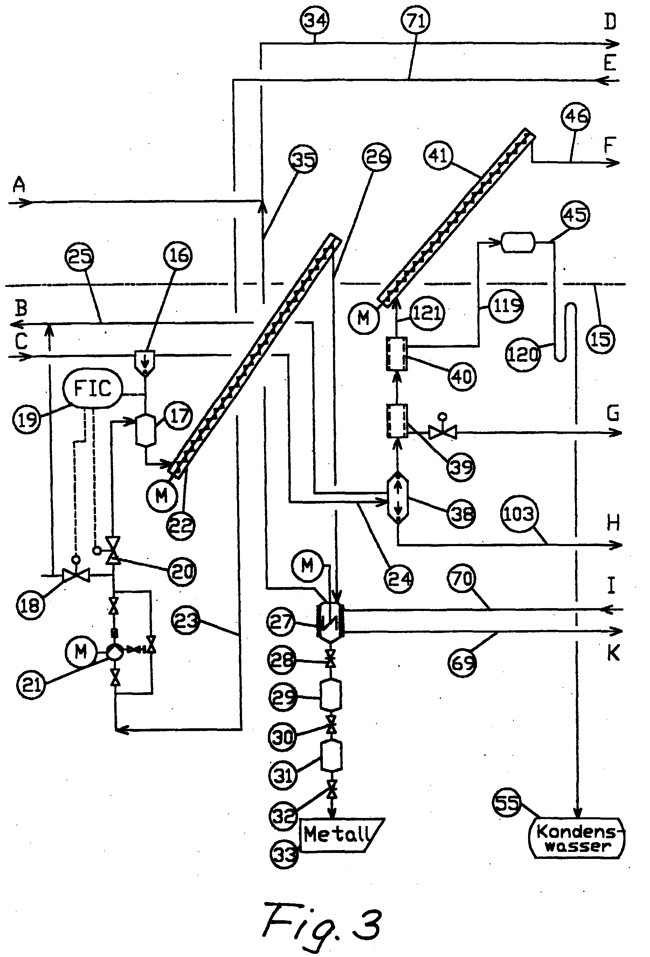

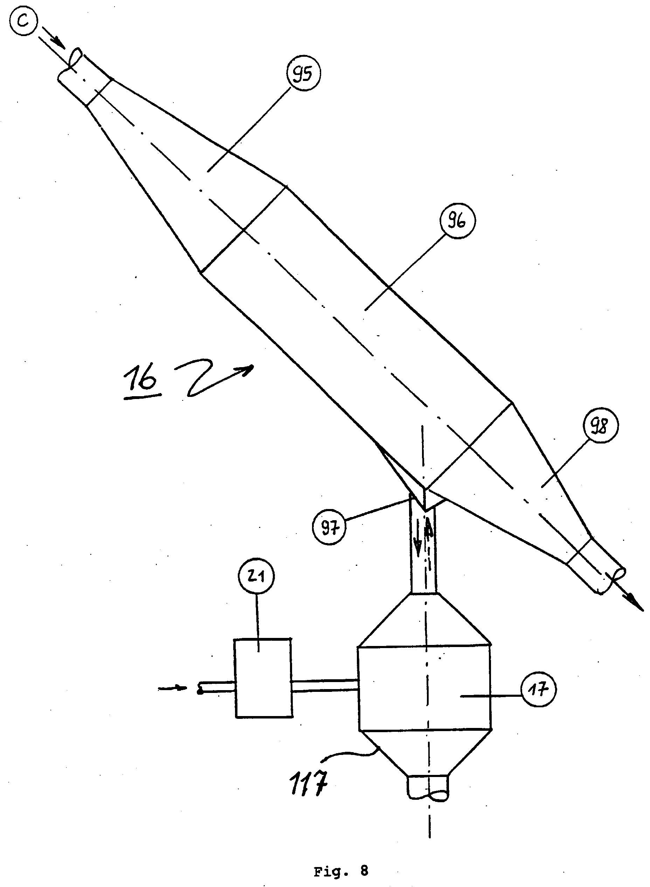

Von den Doppelarmrührwerken 14 wird das Dreiphasengemisch gemäß Figur 3 über die Leitung C in einen Metallsedimentator 16 gefördert, der im einzelnen in Figur 8 gezeigt ist. Der Metallsedimentator 16 besteht aus einem schräg abwärts geneigten Diffusor 95, der im Prinzip eine sich nach unten öffnende trichterförmige Form besitzt, an den sich ein Rohr 96 definierter Länge und definierten Durchmessers mit gleicher Neigung wie der Diffusor 95 anschließt. Das Rohr 96 ist so dimensioniert, daß bis zum unten angefügten Austrittsstutzen 97 des Rohres 96 auch die feinsten anfallenden Metallpartikel auf den Boden abgesunken sind. Die Neigung des Diffusors 95 und des Rohres 96 ist nach der Gleitreibung der Metallpartikel auf der Rohrwand bemessen, um ein sauberes Abgleiten der sedimentierten Metallpartikel zu gewährleisten. Der Metallsedimentator 16 ist in seiner Höhe und Länge so dimensioniert, daß sich während des Sinkvorganges der einzelnen Teile Metall und Kunststoff durch ihr unterschiedliches Sinkverhalten sicher trennen.

Die sedimentierten Metallpartikel fallen in den Austrittsstutzen 97, an den sich ein Metallsammelbehälter 17 anschließt. Da gleichzeitig aber auch Kunststoffpartikel auf den Boden gesunken sind, treten diese ebenfalls in den Austrittsstutzen 97 ein. Durch eine Durchflußregelung 19 wird mittels einer Pumpe 21 und einem nachgeschalteten Regelungsventil 20 dem Metallsammelbehälter 17 eine so gemessene Menge an regeneriertem, reinem Lösungsmittel zugeführt, die für einen definierten Aufwärtsstrom an Lösungsmittel aus dem Metallsammelbehälter 17 durch den Austrittsstutzen 97 hindurch notwendig ist. Dieser Aufwärtsstrom ist in seiner Geschwindigkeit geringer als die Sinkgeschwindigkeit der feinsten Metallpartikel, jedoch größer als die höchste Sinkgeschwindigkeit der größten Kunststoffpartikel. Aufgrund der Gegenströmung werden die Schwebestoffe, nämlich Kunststoff- und Schmutzpartikel, nach oben geschwemmt, die Metallpartikel hingegen sinken mit verminderter Sinkgeschwindigkeit nach unten. Dadurch werden Kunststoff- und Schmutzpartikel in den Hauptstrom an Lösungsmittel zurückgeschwemmt und verlassen zusammen mit allen eventuell vorhandenen Wassertröpfchen, Papierschnipseln und Texilfasern, den Metallsedimentator 16 über einen Auslauftrichter bzw. Auslaufstutzen 98 am unteren Ende des Rohres 96 nach dem Austrittsstutzen 97, wie es in Figur 8 gezeigt ist. Der Auslauftrichter 98 besitzt vorzugsweise die gleiche Richtung wie der Diffusor 95 und das Rohr 96.

Im Austrittsstutzens 97 kann ein Schauglas angeordnet sein zur visuellen Kontrolle des Absink- und Ausschwemmvorganges innerhalb des Metallsedimentators 16.

Die Metallpartikel sinken durch den Austrittsstutzen 97 im Metallsammelbehälter 17 in einen am unteren Ende angeordneten Auffangtrichter 117, an dessen unterer Spitze eine Förderschnecke 22 (Figur 3) angeschlossen ist. Die Förderschnecke 22 fördert die Metallpartikel über das Flüssigkeitsniveau 15 der Anlage, wobei das Lösungsmittel abgesiebt wird und abtropft. Von dort fallen die Metallpartikel in ein ein- oder mehrstufiges Trocknungssystem 27 gemäß dem Stand der Technik, daß über eine Leitung 35 mit der Leitung für Lösungsmitteldampf 34 verbunden ist und welches über zwei Heizleitungen 69 und 70 mit Heizwärme versorgt wird. Die Leitung 35 führt die bei der Trocknung entstehende Lösungsmitteldämpfe ab. Über ein gasdicht abgeschiebertes Kammerschleuesensystem, bestehend aus Schieber 28 nach dem Trockner 27, Kammerschleuse 29, Schieber 30, Kammerschleuse 31 sowie Schieber 32, wird das getrocknete Metall in einen Transportbehälter 33 für Metall gefördert. Damit ist das Metall prinzipiell rückgewonnen.

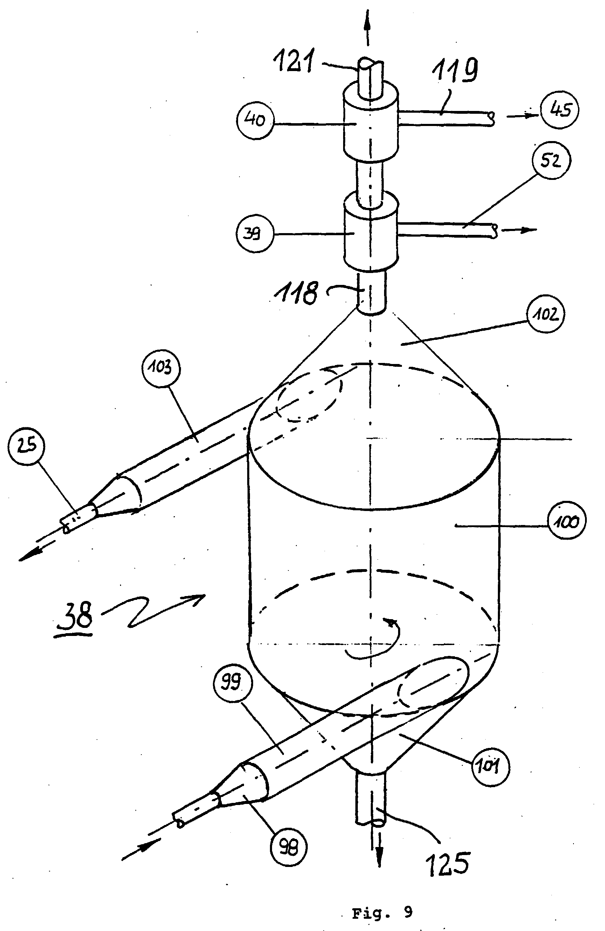

Nach Passieren des Metallsedimentators 16 strömt das nun metallfreie Gemisch aus Lösungsmittel, Kunststoff und Verunreinigungen über einen Anschluß 24 aus dem Metallsedimentator 16 in einen Kunststoffsedimentator 38, der im einzelnen in Figur 9 gezeigt ist. Der Kunststoffsedimentator 38 nutzt die unterschiedlichen Dichten der verschiedenen in den Mantelwerkstoffen verwendeten Kunststoffe im Verhältnis zum Lösungsmittel aus. Während PVC im Verhältnis zum Lösungsmittel dichter ist, also in ihm sinkt, sind andere Polyolefine, Papier und Textilfasern weniger dicht als das Lösungsmittel. Diese Materialien schwimmen auf und können damit vom PVC separiert werden. Es ist somit die saubere Trennung vom PVC gegeben. Da bedingt durch die vorangehende Lagerung des Bearbeitungsgutes dieses durch Niederschläge feucht geworden sein kann, andererseits im Prozeß anfallende Luftfeuchte als Wasser in sehr geringen Mengen anfällt, wird dieses ebenfalls an dieser Stelle separat abgeschieden.

Der Kunststoffsedimentator 38 gemäß Figur 9 besteht aus einem zylindrischen Zentralbehälter 100, der oben einen Sammeltrichter 102 und unten einen trichterförmigen Boden 101 mit einem Abgangsrohr 125 aufweist. Am unteren Ende des Zentralbehälters 100 oberhalb des trichterförmigen Bodens 101 ist waagrecht ein Diffusor 98 zur Strömungsminderung angeordnet, an den sich ein horizontales Rohr 99 definierter Länge und mit definiertem Durchmesser anschließt, welches tangential in den Zentralbehälter 100 mündet. Dieses Rohr 99 ist so bemessen, daß sich der größte Teil des Kunststoffs, vorzugsweise über 99 %, bereits hierin auf dem Boden des Rohres 99 absetzt und mit dem Strom durch das Abgangsrohr 125 des trichterförmigen Bodens 101 ausgetragen wird. Durch die tangentiale Einmündung des Rohres 99 in den Zentralbehälter 100 erzeugt die Strömung eine Rotationsbewegung mit einer Sekundärströmung. Dadurch werden selbst feinste Kunststoffpartikel durch den entstehenden 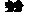 Teetasseneffekt" jeweils in der Mitte des trichterförmigen Bodens 101, die PVC-Partikel mit einer Dichte größer als das Lösungsmittel und in der Mitte des oberen Sammeltrichters 102 Wassertröpfchen, Papierschnipsel, Textilfasern und sonstige Polyolefine mit Dichten kleiner als der des Lösungsmittels gesammelt. Im oberen Bereich des Zentralbehälters 100 ist wiederum tangential an denselben ein waagrechtes Ablaufrohr 103 angeordnet. Dieses Ablaufrohr 103 zum Ablauf absedimentierten Lösungsmittels ist zur Aufrechterhaltung der Rotationsbewegung ebenfalls tangential am Zentralbehälter 100 angeordnet und liegt um eine definierte Höhe über dem Zulauf 99, um sowohl eine sehr beruhigte Sedimentationsströmung zu gewährleisten, als auch den 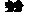 Teetasseneffekt" voll ausnutzen zu können. Das Ablaufrohr 103 mündet in eine Rohrleitung 25, die das absedimentierte Lösungsmittel zur Wiederverwendung über die Leitung B-B in den Figuren 2 und 3 dem Quellbehälter 10 zuführt.

An der Spitze des oberen Sammeltrichters 102 befindet sich ein Stutzen 118 mit Flansch, auf den ein Parallelstromfilter 39 aufgesetzt ist. Durch diesen Parallelstromfilter 39 und eine seitlich dazu angeschlossene Rohrleitung 52 wird exakt geregelt die Menge an Lösungsmittel der Anlage entzogen, die notwendig ist, um die Wirksamkeit des Lösungsmittels aufrecht zu erhalten. Bei Anquellen der Mantelwerkstoffe werden aus diesen im begrenzten Maß Weichmacher, Gleitmittel und Füllstoffe gelöst. Mit steigender Konzentration dieser Stoffe im Lösungsmittel verliert diese zunehmend die Fähigkeit, die Mantelwerkstoffe aufzuquellen. Durch die über den Parallelstromfilter 39 geregelt in die Leitung 52 abgeführte verunreinigte Lösungsmittelmenge wird die Menge an gelösten Zuschlagsstoffen der Mantelwerkstoffe ausgetragen, die notwendig ist, um die Konzentration der Verunreinigungen auf einer Größe zu halten, die die Quellfähigkeit des Lösungsmittels sicher gewährleistet.

Über dem Parallelstromfilter 39 kann ein zweiter Parallelstromfilter 40 gleicher Konstruktion angeordnet sein, der eine seitlich angeschlossene Rohrleitung 119 aufweist. Der Parallelstromfilter 40 ist so in Relation zum Flüssigkeitsspiegel 15 der Anlage positioniert, daß Wasser mit geringerer Dichte als der des Lösungsmittels auf dem Lösungsmittel aufschwimmt. Mit steigendem Wasserspiegel im Filtersystem 39, 40 senkt sich die Phasengrenzfläche zwischen Wasser-Lösungsmittel ab. Erreicht der Wasserspiegel einen Überlaufbehälter 45, der an die Leitung 119 des Parallelstromfilters 40 angeschlossen ist, so läuft das Wasser über eine nachgeordnete Syphonleitung 120, die den Austritt von Lösungsmitteldämpfen in die Umgebung verhindert und die in einen Kondenswasserbehälter 55 führt. Papierschnipsel, Papierfasern, Kunststoffpartikel aus Polyolefinen, die nicht PVC sind, sammeln sich in der Phasengrenzfläche zwischen Wasser-Lösungsmittel. Die Phasengrenzfläche ragt, wenn eventuell eingeschlepptes Kondens- und Niederschlagswasser über den Überlaufbehälter 45 abgeflossen ist, in eine dem Parallelstromfilter 40 nachgeschaltete Förderschnecke 41 ein, die a die abgehende Leitung 121 des Parallelstromfilters 40 angeschlossen ist (Figur 3). Die Förderschnecke 41 fördert alle sie erreichenden Feststoffpartikel über das Flüssigkeitsniveau 15 der Anlage, siebt Lösungsmittel ab und fördert diese Abfälle über eine Leitung 46 (F) in ein Trockensystem 47 gemäß dem Stand der Technik.

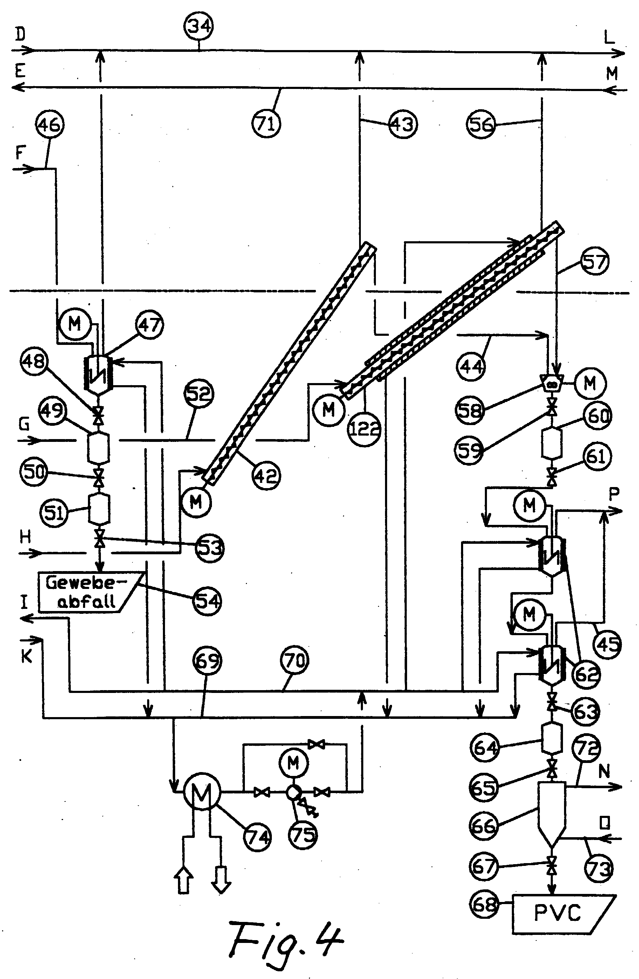

Nach Figur 4 besteht das Trocknersystem 47 aus einem oder mehreren beliebigen Trocknern. Es trocknet die Abfälle und fördert diese durch ein gasdicht abgeschiebertes Kammerschleusensystem, bestehend aus Tocknersystem 47, nachgeordnetem Schieber 48, nachgeordneter Kammerschleuse 49, nachgeordnetem Schieber 50, nachgeordneter Kammerschleuse 51, nachgeordnetem Schieber 53, wobei das Kammerschleusensystem den Austritt von Lösungsmitteldämpfen in die Umwelt verhindert, nachfolgend in einen Abfallbehälter 54. Der entstehende Abfall stellt gewöhnlichen Gewerbeabfall dar und ist nach entsprechender Klassierung wenigstens zum größten Teil nach dem DFFD verwendbar.

Die zur Wiederaufbereitung über eine Leitung 52 (G) dosierte Lösungsmittelmenge wird in einer mantelbeheizten Trockenförderschnecke 122 verdampft. Dabei polymerisieren Weichmacher, Gleitmittel und sonstige in Lösung gegangenen Stoffe als flockige Schicht an der Trocknerwand der Trockenförderschnecke 122 aus. Die entstehenden Lösungsmitteldämpfe werden über eine Leitung 56 am Ausgang der Trockenförderschnecke 122 abgeführt, während die entstehenden Polymerflocken von der Tocknerwand geschabt und in einen der Trockenförderschnecke 122 nachgeschalteten motorbetriebenen Kunststoffzerfaserer 58 über eine Ausgangsleitung 57 gefördert werden. Innerhalb des Kunststoffzerfaserers 58 werden die Polymerflocken mit dem quellnassen PVC fein zermahlen, wodurch die Polymerflocken an der Oberfläche der PVC-Partikel wieder angelöst und in das PVC zurückgeführt werden. Ihre Rückführung garantiert die ursprüngliche Qualität des zu gewinnenden PVC-Recyclats.

Aus dem unteren Sammeltrichter 101 des Kunststoffsedimentators 38 fördert eine Förderschnecke 42 die tropfnassen Kunststoffpartikel über das Flüssigkeitsniveau 15 der Anlage, siebt überschüssiges Lösungsmittel ab und fördert den Kunststoff über eine Leitung 44 in den Kunststoffzerfaserer 58. Hier werden die PVC-Partikel zur Vorbereitung der Trocknung zusammen mit den Polymerflocken fein gemahlen. Eine Leitung 43 am Ende der Förderschnecke 42 stellt die Verbindung des gesamten Systems mit der Leitung für Lösungsmitteldampf 34 (D-L in Fig. 4) her und verhindert unkontrollierte Druckschwankungen.

Vom Kunststoffzerfaserer 58 wird das vorbereitete PVC-Granulat über ein gasdicht abgeschiebertes Kammerschleusensystem, bestehend aus Schieber 59, nachgeordneter Kammerschleuse 60 und nachgeordnetem Schieber 61, in ein vorzugsweise mehrstufiges Trocknungssystem 62 gemäß dem Stand der Technik gefördert. Die Beheizung des Trocknungssystems 62 erfolgt über Heizleitungen 69 und 70.

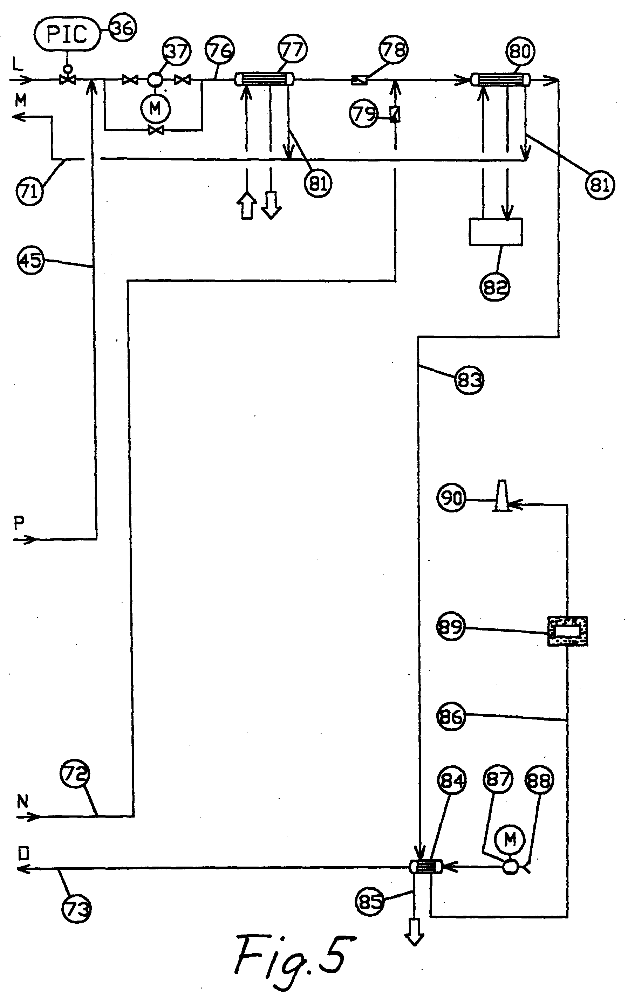

Der entstehende Lösungsmitteldampf wird über eine Leitung 45 in die Hauptleitung für Lösungsmitteldampf (P-Figur 4; L-Figur 5) gezogen. Während in der Leitung 34 nur geringer Unterdruck gehalten wird, erfolgt die Trocknung des PVC-Granulats bei höherem Vakuum. Eine Druckregelung gemäß Figur 5 in der Leitung 34 wird durch eine Regeleinrichtung 36 gewährleistet. Eine Vakuumpumpe 37 sorgt für den Massestrom freigesetzter bzw. entstehender Lösungsmitteldämpfe und drückt diese in eine Leitung 76.

Das trockene, jedoch noch mit absorbiertem Lösungsmittel behaftete PVC-Granulat wird gemäß Figur 4 nach den Trocknern 62 in ein Kammerschleusensystem 63, 64, 65 gefördert und gelangt von dort in einen Desorptionsbehälter 66, der so dimensioniert ist, daß er das nun trockene, desorbierende PVC-Granulat solange zwischenlagern kann, bis dasselbe nach Passieren dieses Desorptionsbehälters 66 keine Restmengen an Lösungsmittel mehr an die Umwelt desorbieren kann. Zur Gewährleistung dieser Funktion wird der Desorptionsbehälter 66 durch einen an seinem unteren Ausgang angeordneten Schieber 67 gasdicht abgeschiebert. Für die Desorption wird der Desorptionsbehälter 66 mit entfeuchteter Frischluft ausreichenden Volumenstromes über eine Leitung 73 versorgt, die vorzugsweise im unteren Bereich des Desorptionsbehälters 66 in diesen einmündet und die über eine Leitung 72, vorzugsweise im oberen Bereich des Desorptionsbehälters 66, denselben wieder verläßt. Der Schieber 67 am Ausgang des Desorptionsbehälters 66 wird nur geöffnet, um chargenweise desorbiertes PVC-Granulat zu entnehmen. Während dieser Zeit wird der Zustrom von Desorptionsluft über die Leitung 73 abgestellt.

Die Vakuumpumpe 37 in Figur 5 fördert den Lösungsmitteldampf in die Leitung 76 in einen Wärmetauscher 77, der mit Umgebungswärme auf der kalten Seite (Wasser oder Luft) bei Temperaturen auf der kalten Seite unter 303 Grad Kelvin (unter 30 Grad Celsius) arbeitet und damit den größten Teil des Lösungsmittels aus dem Lösungsmitteldampf auskondensiert. Das nun flüssige Lösungsmittel fließt mittels Schwerkraft über Leitungen 81 und 71 zur Pumpe 21.

Dem Abgasstrom nach dem Wärmetauscher 77 wird hinter einem Rückschlagverhinderungssystem 78 der zweite Abgasstrom vom Desorptionsbehälters 66 über eine Leitung 72 (N-Figur 5) und ein Rückschlagverhinderungssystem 79 innerhalb der Leitung 72 zugemischt. Danach wird das Abgas in einen Wärmetauscher 80 gedrückt. Der Wärmetauscher 80 stellt in einem beliebig gestalteten Tiefkühlsystem 82 eine Tieftemperaturkühlung des Abgasstromes sicher. Der größte Teil des noch vohandenen Lösungsmitteldampfes wird aus dem Abgas auskondensiert und fließt über eine Leitung 81 in die Leitung 71.

Der nun sehr kalte Abgasstrom wird über eine Leitung 83 zu einem Wärmetauscher 84 gefördert und hier gegen Frischluft auf der warmen Seite erwärmt. Nach Passieren des Wärmetauschers 84 wird das Abgas über eine Leitung 86 in einen Absorptionsfilter 89 gefördert, wo die letzten Reste an Lösungsmittel dem Abgas entzogen werden. Das so gereinigte Abgas wird über einen Kamin 90 an die Umgebung abgegeben. Die Frischluft für den Desorptionsluftstrom wird über einen Ansaugstutzen 88 von einem Gebläse 87 angesogen und in dem Gebläse 87 nachgeschalteten Wärmetauscher 84 gekühlt, um die vorhandene Luftfeuchte auszukondensieren. Das Kondenswasser wird über eine Leitung 85 entsorgt, die nun getrocknete Luft wird des weiteren in die Leitung 73 gedrückt.

### Gewerbliche Anwendbarkeit und Nützlichkeit:

Das erfindungsgemäße Verfahren und die Vorrichtung sind in der Recycling-Industrie zur Rückgewinnung von reinem Kupfer bzw. Metall sowie von reinem Kunststoff anwendbar.

Das erfindungsgemäße Verfahren und die Vorrichtung besitzen den hervorstechenden Vorteil, daß nach dem Durchlaufen der Verfahrensschritte durch die Vorrichtung sowohl das Metall wie der Kunststoff in getrennter, sortenreiner Form vorliegen, wobei der Kunststoff nicht durch Schwermetalle oder sonstigen Schmutz verunreinigt ist; der Kunststoff wird sortenrein in extrudierfähiger Form gewonnen. In höchst voreilhafter Weise gleicht das Kunststoffrecyclat dem neuwertigen Kunststoff gleicher Art in seinen Werksteffeigenschaften. Ein weiterer Aspekt der Nützlichkeit besteht darin, daß die gesamte Anlage in sämtlichen Prozeßstufen hermetisch geschlossen ist, so daß keine Dämpfe des Quell- und/oder Lösungsmittels nach außen in die Atmosphäre oder belastete Flüssigkeiten in das Abwasser dringen können. Ebenso ist von Vorteil, daß die Trennung von Metall und Kunststoff im Prinzip physikalisch-mechanisch geschieht und das Quell- und/oder Lösungsmittel nur zum Aufquellen des Kunststoffes benützt wird, mit demselben jedoch keine chemischen Verbindungen eingeht. Als Quell- und/oder Lösungsmittel kann bevorzugt Dichlormethan oder ein ähnliches Quell- und/oder Lösungsmittel verwendet werden.

### Liste der Bezugszeichen:

- 1: Vorbereitungsstation
- 2: Häckselbunker
- 3: Förderschnecke
- 4: Sammelbehälter
- 5, 7, 9: Schieber
- 6, 8: Schleusenkammern
- 10: Quellbehälter
- 11: Bypaßleitung
- 12, 22, 41, 42: Förderschnecken
- 13: Walzenkegelmühlen
- 14: Doppelarmrührwerke
- 15: Flüssigkeitsspiegel bzw. Flüssigkeitsniveau
- 16: Metallsedimentator
- 17: Metallsammelbehälter
- 19: Durchflußregelung
- 20: Regelungsventil
- 21: Pumpe
- 24: Anschluß
- 25: Rohrleitung
- 27: Trocknungssystem
- 28, 30, 32: Schieber
- 29, 31: Kammerschleuse
- 33: Transportbehälter für Metall
- 34: Leitung für Lösungsmitteldampf
- 35,43,46,52,56: Leitungen
- 36: Regeleinrichtung
- 37: Vakuumpumpe
- 38: Kunststoffsedimentator
- 39,40: Parallelstromfilter
- 45: Überlaufbehälter
- 47: Trockensystem
- 48, 50, 53,59,61,67: Schieber
- 49, 51: Kammerschleuse
- 54: Abfallbehälter
- 55: Kondenswasserbehälter
- 57: Ausgangsleitung
- 58: Kunststoffzerfaserer
- 60: Kammerschleuse
- 62: Trocknungssystem bzw. Trockner
- 66: Desorptionsbehälter
- 69,70: Heizleitungen
- 71, 72, 73, 76,81,83: Leitungen
- 77,80,84: Wärmetauscher
- 78,79: Rückschlagverhinderungssysteme
- 82: Tiefkühlsystem
- 85, 86: Leitung
- 87: Gebläse
- 88: Ansaugstutzen
- 89: Absorptionsfilter
- 90: Kamin
- 91: Walkkegel
- 92: Kulisse
- 93: Rotorarme
- 94: Statorarme
- 95: Diffusor
- 96: Rohr
- 97: Austrittsstutzen
- 98: Auslauftrichter bzw. Auslaufstutzen
- 99: horizontales Rohr
- 100: Zentralbehälter
- 101: trichterförmiger Boden des Zentralbehälters
- 102: Sammeltrichter
- 103: Ablauf bzw. Ablaufstutzen
- 104: Gasleitung
- 105: Leitung
- 106: Rückflußleitung
- 107: Gehäuse
- 108: Federn
- 109: äußere umlaufenden Mantelwandung
- 110: innere umlaufende Manteloberfläche der Kulisse
- 111: umlaufender Spalt
- 112: unterer Ausgang
- 113: zylindrischer Behälter
- 114: oberer Einlaß des Behälters, Zulaufstutzen
- 115: Achse
- 116: Ablaufstutzen
- 117: Auffangtrichter
- 118: Stutzen mit Flansch
- 119: Rohrleitung
- 120: Syphonleitung
- 121: abgehende Leitung
- 122: Trockenförderschnecke
- 123: Leitung
- 124: Auslaß
- 125: Abgangsrohr

## Patentansprüche

1. Verfahren zum kontinuierlichen Verwerten von kunststoffbeschichteten Kabelresten und Kabelschrott, wobei die
a) Kabelreste mechanisch zerkleinert werden,
b) das Häckselgut in einem Quellbehälter (10) mit einem Quell- und/oder Lösungsmittel aufgeweicht und gegebenenfalls verrührt wird,
c) das Teilen/Zerlegen des angequollenen Kunststoff/Metallverbundes mittels mechanischer Maßnahmen wie Rühr-, Schlag- oder Mahleffekte erfolgt,
d) das Trennen der Suspension aus Lösungsmittel, Kunststoff und Metall durch Schwerkraftabscheiden/Sichten vorgenommen wird und
e) weitere übliche Behandlungen wie Trocknen in einem abgekapselten System zur Rückgewinnung des Lösungsmittels durchgeführt werden,
dadurch gekennzeichnet, daß
- das nach Schritt b) angequollene Häckselgut wenigstens einer Walzenkegelmühle (13) zugeführt wird, wobei die Kunststoffmäntel aufgebrochen und die Drahtseelen gelockert werden, jedoch kein Zerreiben der Komponenten stattfindet,
- das Teilen/Zerlegen nach Schritt c) mittels eines Doppelarmrührwerkes (14) vorgenommen wird und
- das Trennen der Suspension nach Schritt d) durch
- einen Metallsedimentator (16) erfolgt, in welchem die schwereren Metallpartikel aufgrund der Schwerkraft absinken und sich von den leichteren Kunststoff- und eventuellen Schmutzpartikeln trennen und die Metallpartikel am unteren Ende des Metallsedimentators (16) aus demselben entnommen werden und die Fördergeschwindigkeit des Förderstromes des Drei- oder Mehrphasengemisches innerhalb des Metallsedimentators (16) so gewählt wird, daß die Metallpartikel entsprechend ihrer größenabhängigen unterschiedlichen Sinkgeschwindigkeiten bis zum Austritt aus dem Metallsedimentator (16) bzw. bis zum unteren Ende desselben absinken, wobei in den Förderstrom ein vorgebbarer Gegenstrom von Quell- und oder Lösungsmittel eingeschleust wird, der die leichteren Kunststoff- und Schmutzpartikel aus dem Förderstrom und den darin absinkenden Metallpartikeln herausschleust und der Gegenstrom mitsamt den Kunststoff- und Schmutz partikeln aus dem Metallsedimentator (16) als metallfreier Teilstrom herausgeführt,
- und einem Kunststoffsedimentater (38) zum sedimentmäßigen Abscheiden und Trennen der Kunststoffpartikel zugeführt wird
- sämtliche Verfahrensschritte gasdicht gegenüber der Umwelt durchgeführt werden.

2. Verfahren nach Anspruch 1, dadurch gekennzeichnet,
daß das in einem geschlossenen Kreislauf zirkulierende Quellmittel aus den Stationen der Metall- und Kunststoffreinigung und/oder der Metall- und Kunststofftrocknung abgesaugt und gegebenenfalls in einer Abscheidestation in einem Reinigungsvorgang abgeschieden und anschließend wieder dem Quellbehälter (10) zugeführt wird.

3. Verfahren nach Anspruch 1, dadurch gekennzeichnet,
daß mittels eines nach dem unteren Ende oder im unteren Ende des Quellbehälters (10) angeordneten Förderers (12), vorzugsweise Förderschnecke (12), ein absolut kontinuierlicher Massenstrom gequollener Kabelhäcksel in Schüttdichte erzeugt wird, die der Walzenkegelmühle (13) aufgegeben wird, wobei das gequollene Gemisch in der Schüttdichte nur soviel Lösungsmittel enthält, wie freier Raum in der Schüttung gegeben ist, und anschließend das Gut in der Walzenkegelmühle (13) kontinuierlich gewalkt wird.

4. Verfahren nach Anspruch 1 oder 2, dadurch gekennzeichnet,
daß die Metallteilchen nach dem Metallsedimentator (16) in einen Metallsammelbehälter (17) gefördert werden, aus dem sie mit einer Förderschnecke (22) über das Flüssigkeitsniveau (15) der Anlage gehoben und anschließend in einem Trocknersystem (27) getrocknet und über ein Abkammerungssystem (28,29,30,31,32) in einen Metallbehälter (33) ausgegeben werden.

5. Verfahren nach Anspruch 1, dadurch gekennzeichnet,
daß die tropfnassen Kunststoffpartikel, vorzugsweise PVC-Partikel, aus dem Kunststoffsedimentator (38) über das Flüssigkeitsniveau (15) der Anlage gefördert und von überschüssigem Lösungsmittel abgesiebt werden, vorzugsweise mit einer Förderschnecke (42), danach fein zermahlen, vorzugsweise mit einem Kunststoffzerfaserers (58), und anschließend getrocknet werden.

6. Verfahren nach Anspruch 1, dadurch gekennzeichnet,
daß das getrocknete, jedoch noch mit absorbiertem Lösungsmittel behaftete PVC-Granulat abgekammert mittels eines Kammerschleusensystems (63,64,65) in einen Desorptionsbehälter (66) gefördert wird, der zur Desorption mit vorzugsweise entfeuchteter Frischluft versorgt wird und aus dem das desorbierte PVC-Granulat entnommen werden kann.

7. Verfahren nach Anspruch 1 oder 5, dadurch gekennzeichnet,
daß die zur Wiederaufbereitung anstehende Lösungsmittelmenge mitsamt den Verunreinigungen verdampft wird, vorzugsweise in einer mantelbeheizten Trockenförderschnecke (122), wodurch Weichmacher, Gleitmittel und sonstige in Lösung gegangenen Stoffe als flockige Schicht auspolymerisieren, wonach diese Polymerflocken zusammen mit den PVC-Partikeln, die noch quellnaß sein können, zermahlen werden, wodurch die Polymerflocken an der Oberfläche der PVC-Partikel wieder angelöst und in das PVC zurückgeführt werden, wodurch eine Qualität des zu gewinnenden PVC-Recyclats gemäß ursprünglichem PVC erhalten wird.

8. Verfahren nach Anspruch 1 oder 7, dadurch gekennzeichnet,
daß zur Wiedergewinnung des Lösungsmittels aus dem Desorptionsbehälter (66) eine Vakuumpumpe (37) den Lösungsmitteldampf über eine Leitung (76) in einen Wärmetauscher (77) fördert, der mit Umgebungswärme auf der kalten Seite (Wasser oder Luft) bei Temperaturen auf der kalten Seite unter 303 Grad Kelvin (unter 30 Grad Celsius) arbeitet und damit den größten Teil des Lösungsmittels aus dem Lösungsmitteldampf auskondensiert, wonach das flüssige Lösungsmittel über Leitungen (81) und (71) zu einer Pumpe (21) in den Kreislauf zurückfließt, vorzugsweise mittels Schwerkraft, und dem Abgasstrom nach dem Wärmetauscher (77) der zweite Abgasstrom vom Desorptionsbehälters (66) innerhalb einer Leitung (72) zugemischt wird.

9. Verfahren nach Anspruch 8, dadurch gekennzeichnet,
daß das Abgas in einen Wärmetauscher (80) gedrückt wird, der eine Tieftemperaturkühlung des Abgases sicherstellt, wodurch der größte Teil des noch vorhandenen Lösungsmitteldampfes aus dem Abgas auskondensiert und über eine Leitung (81) in den Kreislauf zurückgespeist wird, der Abgasstrom zu einem Wärmetauscher (84) gefördert und hier gegen Frischluft auf der warmen Seite erwärmt und gegebenenfalls in einen Absorptionsfilter (89) geleitet wird zum Entziehen der letzten Reste an Lösungsmittel.

10. Verfahren nach Anspruch 1, dadurch gekennzeichnet,
daß das Häckselgut als definierter Volumenstrom unter Luftabschluß dem Quellbehälter (10) zugeführt wird.

11. Verfahren nach Anspruch 5, dadurch gekennzeichnet,
daß das Häckselgut dem Quellbehälter (10) über ein gasdichtes Kammerschleusensystem (5,6,7,8) oder gasdichtes Zellrad aufgegeben wird, welches das Häckselgut in einem vorgebbaren Durchfluß gasdicht in den Quellbehälter (10) überführt.

12. Verfahren nach Anspruch 1, dadurch gekennzeichnet,
daß das Drei- oder Mehrphasengemisch die Stufe der Sedimentation wiederholt durchläuft bzw. mehrfache, hintereinandergeschaltete Sedimentatoren für Metall und/oder Kunststoff (16,38) benützt werden.

13. Verfahren nach Anspruch 1 und 7, dadurch gekennzeichnet,
daß der Gegenstrom innerhalb des Metallsedimentators (16) als Teilstrom aus diesem herausgeführt und in den Kunststoffsedimentator (38) geleitet wird, in welchem Schwebstoffe, Weichmacheröle und schwimmende Verunreinigungen als Schicht aufschwimmen und von den Kunststoffteilchen getrennt werden, wobei die Verunreinigungsschicht in einem Teilvolumenstrom aus dem Kunststoffsedimentator (38) abgeführt und über das Flüssigkeitsniveau (15) der Anlage herausgehoben und in eine heizbare Förderschnecke (122) geleitet und getrocknet wird.

14. Verfahren nach Anspruch 1 oder 7, dadurch gekennzeichnet,
daß der in da Kunststoffsedimentator (38) geleitete Massestrom am unteren Ende des Kunststoffsedimentators (38) tangential eingeleitet wird, so daß die Flüssigkeit innerhalb desselben rotiert und eine Sekundärströmung erzeugt, wobei der größte Teil der Kunststoffpartikel mit einer Dichte größer als das Lösungsmittel sich am Boden (101) des Kunststoffsedimentators (38) absetzt und mit dem Strom durch ein Abgangsrohr (125) des Bodens (101), vorzugsweise unterhalb der Einströmöffnung, ausgetragen und in einen Förderer (42) gefördert wird, der die Kunststoffpartikel über das Flüssigkeitsniveau (15) der Anlage hebt und die quellnassen Kunststoffpartikel einem Kunststoffzerfaserer (58) zuführt, wohingegen Verunreinigungen, wie Wassertröpfchen, Papierschnipsel, Textilfasern und sonstige Polyolefine, mit Dichten kleiner als der des Lösungsmittels sich in der oberen Spitze des Kunststoffsedimentators (38) sammeln und mittels Förderschnecke (41) aus dem Kunststoffsedimentator (38) abgeführt werden, die anschließend im Trockner (47) getrocknet und über das Kammerschleusensystem (48,49,50, 51,53) nach außen gefördert werden.

15. Verfahren nach Anspruch 1, dadurch gekennzeichnet,
daß als Quell- und/oder Lösungsmittel Dichlormethan verwendet wird.

16. Vorrichtung zum kontinuierlichen Verwerten von kunststoffbeschichteten Kabelresten und Kabelschrott, unter mechanischer Zerkleinerung der Kabelreste, mit einem Quellbehälter (10) mit Quell- und/oder Lösungsmittel zum Aufweichen und gegebenenfalls Verrühren des Häckselguts, mit Rühr, Schlag- oder Mahleinrichtungen zum Teilen/Zerlegen des angequollenen Kunststoff/Metallverbundes mittels mechanischer Maßnahmen, mit Schwerkraftscheider/Sichter zum Trennen der Suspension aus Lösungsmittel, Kunststoff und Metall durch Schwerkraftabscheiden/Sichten, zur Durchführung des Verfahrens nach Anspruch 1, gekennzeichnet durch
eine dem Quellbehälter (10) nachgeschaltete Walzenkegelmühle (13),
ein nachgeschaltetes mechanisches Doppelarmrührwerk (14) zur mechanischen Trennung der Metallpartikel von den restlichen Ummantelungen,
einen nachgeschalteten Metallsedimentator (16) zur Schwerkraftabscheidung der schwereren Metallpartikel gegenüber den Kunststoffpartikeln und eventuellen Schmutzpartikeln, wobei die Metallpartikel am unteren Ende des Metallsedimentators (16) aus demselben entnehmbar sind,
einen in den Metallsedimentators (16) eingeschleusten Gegenstrom von Quell- und/ oder Lösungsmittel zum Herausschleusen der leichteren Kunststoff- und Schmutzpartikel aus dem Förderstrom und den darin absinkenden Metallpartikeln,
einen nachgeschalteten Kunststoffsedimentator (38), in den der Gegenstrom mitsamt den Kunststoff- und Schmutzpartikeln aus dem Metallsedimentator (16) als metallfreier Teilstrom zum sedimentmäßigen Abscheiden und Trennen der Kunststoffpartikel einleitbar ist,
wobei sämtliche Teile der Vorrichtung gasdicht gegenüber der Umwelt abgedichtet sind.

17. Vorrichtung nach Anspruch 16, dadurch gekennzeichnet,
daß vor dem Quellbehälter (10) ein gasdichtes Kammerschleusensystem, bestehend aus Schiebern (5,7,9) und wenigstens zwei Kammerschleusen (4,6,8) oder ein Zellrad, vorzugsweise mit Schleusenbehälter, angeordnet ist zur definierten gasdichten Mengenübergabe von Häckselgut in den Quellbehälter (10).

18. Vorrichtung nach Anspruch 17, dadurch gekennzeichnet,
daß der Quellbehälter (10) an seinem unteren Ende konisch geformt ist, und an dieses Ende eine Förderschnecke (12) oder Zellradschleuse angeschlossen ist.

19. Vorrichtung nach Anspruch 16, dadurch gekennzeichnet,
daß die Walzenkegelmühle (13) aus einem Gehäuse (107) besteht, in welchem ein Walkkegel (91) drehbar um eine Achse angeordnet ist, die motorisch antreibbar ist, wobei auf den Walkkegel (91) eine Kulisse (92) aufgesetzt ist, die mittels Federn (108) federbelastet auf den Walkkegel (91) gedrückt ist, so daß die Spitze des Walkkegels (91) in die Kulisse (92) ragt.

20. Vorrichtung nach Anspruch 19, dadurch gekennzeichnet,
daß die Kulisse (92) aus einem Ring besteht, der mit seiner äußeren, umlaufenden Mantelwandung (109) auf und ab beweglich innerhalb des Gehäuses (107) der Walzenkegelmühle (13) gelagert ist, wobei die innere, umlaufende Manteloberfläche (110) der Kulisse (92) konvex gekrümmt ist und mit der kegelförmigen Oberfläche des Walkkegels (91) einen nach außen hin enger werdenden, umlaufenden Spalt (111) ausbildet.

21. Vorrichtung nach Anspruch 16, dadurch gekennzeichnet,
daß unterhalb des Flüssigkeitsspiegels (15) des Quellbehälters (10) an denselben eine Bypaßleitung (11) mit Durchflußregelung angeschlossen ist, die zumindest zum ersten Doppelarmrührwerk (14) führt zur geregelten Flüssigkeitsversorgung der Doppelarmrührwerke (14) mit Quellflüssigkeit.

22. Vorrichtung nach Anspruch 16, dadurch gekennzeichnet,
daß das Doppelarmrührwerk (14) aus einem zylindrischen Behälter (113) mit oberen Einlässen (114,116) und einem, vorzugsweise spiralig, auslaufenden unteren Auslaß (124) besteht und innerhalb des Behälters gekrümmte, feststehende Statorarme (94) sowie eine Achse (115) in Längsrichtung des Behälters (113) drehbar angeordnet ist, an der gekrümmte Rotorarme (93) befestigt sind, die bei Drehung der Achse (115) zwischen den Statorarmen (94) hindurchzulaufen imstande sind, wobei die Rotationsenergie des Dreiphasengemisches so über den Auslaß (124) genutzt wird, daß das Doppelarmrührwerk (14) gleichzeitig als Pumpe wirkt.

23. Vorrichtung nach Anspruch 16, dadurch gekennzeichnet,
daß der Kunststoffsedimentator (38) aus einem zylindrischen Zentralbehälter (100) besteht, der oben einen Sammeltrichter (102) und unten einen trichterförmigen Boden (101) mit einem Abgangsrohr (125) aufweist, wobei am unteren Ende des Zentralbehälters (100) oberhalb des trichterförmigen Bodens (101) tangential waagrecht ein Zulaufrohr (99) in den Zentralbehälter (100) einmündet, im oberen Bereich des Zentralbehälters (100) tangential an denselben ein waagrechter Ablaufstuzen (103) für absedimentierten Lösungsmittel angeordnet ist.

24. Vorrichtung nach Anspruch 23, dadurch gekennzeichnet,
daß auf den Zentralbehälter (100) ein Parallelstromfilter (39) aufgesetzt ist, durch den und eine seitlich dazu an denselben angeschlossene Rohrleitung (52) die Menge an Lösungsmittel der Anlage geregelt entzogen wird, die notwendig ist, um die Wirksamkeit des Lösungsmittels aufrecht zu erhalten.

25. Vorrichtung nach Anspruch 23 oder 24, dadurch gekennzeichnet,
daß über dem ersten Parallelstromfilter (39) ein zweiter Parallelstromfilter (40) angeordnet ist, der eine seitlich angeschlossene Rohrleitung (119) aufweist, die zu einem Überlaufbehälter (45) führt, an den eine Syphonleitung (120) angeschlossen ist, die in einen Kondenswasserbehälter (55) führt, wobei der zweite Parallelstromfilter (40) so in Relation zum Flüssigkeitsspiegel (15) der Anlage positioniert ist, daß Wasser mit geringerer Dichte als der des Lösungsmittels auf dem Lösungsmittel aufschwimmt.

26. Vorrichtung nach Anspruch 24 oder 25, dadurch gekennzeichnet,
daß an den zweiten Parallelstromfilter (39) eine Förderschnecke (41) angeschlossen ist, in die die Phasengrenzfläche zwischen Wasser-Lösungsmittel ragt zur Abförderung der die Förderschnecke (41) erreichenden Feststoffpartikel über das Flüssigkeitsniveau (15) der Anlage in ein Trocknersystem (47), an welches abgekammert über ein Kammerschleusensystem (48,49, 50,51) ein Behälter (54) für Abfall angeschlossen ist.

27. Vorrichtung nach Anspruch 16, dadurch gekennzeichnet,
daß innerhalb des Metallsedimentators (16) ein vorgebbarer Gegenstrom an Quell- und/oder Lösungsmittels zum Aufschwimmen der leichteren Kunststoff- und eventuell Schmutzpartikel erzeugbar ist, der aus dem Hauptstrom als Teilstrom durch einen weiteren Auslaß aus dem Metallsedimentator (16) herausführbar ist, unterhalb des Metallsedimentators (16) ein Metallsammelbehälter (17) zum Aufsammeln der Metallpartikeln angeordnet ist, an den sich ein Förderer (22), vorzugsweise Förderschnecke (22) anschließt, die die Metallpartikel über das Flüssigkeitsniveau der Anlage hebt und zum Trocknen in ein Trocknungssystem (27) fördert zur nachfolgenden Aufgabe der Metallpartikel in einen Metallsammelbehälter (33).

## Claims

1. Process for the continuous utilization of plastic-coated wiring remnants and waste wire, whereby the
a) wire remnants are mechanically comminuted,
b) the chopped material is softened in a swelling tank (10) with a swelling agent and/or a solvent and optionally stirred,
c) the separation / disaggregation of the swollen plastic / metal composite is carried out by mechanical means such as stirring, crushing or grinding effects,
d) the separation of the suspension consisting of solvent, plastic and metal is carried out by gravity separation / gravity classification and
e) additional, commonly employed treatments such as drying are carried out in an encapsulated system in order to recover the solvent,
characterized in that
• the chopped material that is swollen as described in Step b) is fed to at least one roller cone mill (13), whereby the plastic sheathing is broken open and the wire cables are loosened, but the components are not comminuted,
• the separation / disaggregation as described in Step c) is carried out by means of a double-arm agitator (14) and
• the separation of the suspension as described in Step d)
- is carried out by means of a metal sedimentation device (16) in which the heavy metal particles settle as a result of gravity, thereby separating from the lighter plastic and from any dirt particles, and the metal particles are removed from the metal sedimentation device (16) at the bottom thereof and the delivery rate of the conveying flow of the three-phase or multi-phase mixture inside the metal sedimentation device (16) is selected in such a way that, depending on their size, the metal particles settle at the outlet of the metal sedimentation device (16) or to the bottom thereof at different settling rates, whereby a predefinable counterflow of swelling agent and/or solvent is fed into the conveying flow so as to expel the lighter plastic and dirt particles out of the conveying flow as well as the metal particles that are settling therein, and the counterflow, together with the plastic and dirt particles from the metal sedimentation device (16), is discharged as a metal-free partial flow,
- and is conveyed to a plastic sedimentation device (38) for settling and separation of the plastic particles by means of sedimentation,
- and all of the process steps are carried out gas-tight with respect to the environment.

2. Process according to Claim 1, characterized in that
the swelling agent circulating in a closed circuit is withdrawn from the stations of the metal and plastic cleaning system and/or of the metal and plastic drying system, and optionally separated in a settling station during a cleaning process and subsequently returned to the swelling tank (10).

3. Process according to Claim 1, characterized in that
by means of a conveyor (12), preferably a conveying screw (12), located downstream from the bottom or in the bottom of the swelling tank (10), an absolutely continuous mash flow of swollen chopped material is generated as a bulk product which is fed into the roller cone mill (13), whereby the swollen mixture in the bulk product only contains as much solvent as there is free space available in the charge, and subsequently the material is continuously milled in the roller cone mill (13).

4. Process according to Claim 1 or 2, characterized in that
downstream from the metal sedimentation device (16), the metal particles are conveyed to a metal collecting container (17) from which they are lifted by means of a conveying screw (22) to above the liquid level (15) of the installation and subsequently dried in a drying system (27) and discharged into a metal container (33) via a chamber system (28, 29, 30, 31, 32).

5. Process according to Claim 1, characterized in that
the dripping-wet plastic particles, preferably PVC particles, are conveyed out of the plastic sedimentation device (38) to above the liquid level (15) of the installation and excess solvent is sieved off of these particles, preferably with a conveying screw (42), then finely comminuted, preferably with a plastic shredder (58), and subsequently dried.

6. Process according to Claim 1, characterized in that
the PVC granules that have been dried but still contain absorbed solvent are conveyed by means of a chamber lock system (63, 64, 65) into a desorption tank (66) that is supplied with preferably dehumidified fresh air for purposes of desorption and from which the desorbed PVC granules can be removed.

7. Process according to Claim 1 or 5, characterized in that
the quantity of solvent available for recovery - together with the impurities - is evaporated, preferably in a jacket-heated dry conveying screw (122), as a result of which plasticizers, slip agents and other substances that have dissolved then polymerize out as a flocculent layer, after which these polymer flocks are ground up together with the PVC particles that can still be wet from the swelling, as a result of which the polymer flocks on the surface of the PVC particles are partially dissolved again and returned to the PVC, thereby achieving a quality of the recycled PVC that matches the original PVC.

8. Process according to Claim 1 or 7, characterized in that
in order to recover the solvent from the desorption tank (66), a vacuum pump (37) conveys the solvent vapor through a line (76) into a heat exchanger (77) that operates with ambient heat on the cold side (water or air) at temperatures on the cold side below 303 Kelvin (below 30°C [86°F]) and thus the majority of the solvent condenses out of the solvent vapor, after which the liquid solvent flows through lines (81) and (71) to a pump (21) into the circulation system, preferably by means of gravity, and is mixed with the off-gas flow downstream from the heat exchanger (77) of the second off-gas flow from the desorption tank (66) in a line (72).

9. Process according to Claim 8, characterized in that
the off-gas is injected into a heat exchanger (80) that ensures a low-temperature cooling of the off-gas, as a result of which most of the solvent vapor still present condenses out of the off-gas and is fed back into the circulation system through a line (81), the off-gas flow is conveyed to a heat exchanger (84) where it is heated against fresh air on the warm side and optionally fed into an absorption filter (89) in order to extract the last solvent residues.

10. Process according to Claim 1, characterized in that
the chopped material is fed into the swelling tank (10) at a defined volume flow with the exclusion of air.

11. Process according to Claim 5, characterized in that
the chopped material is fed into the swelling tank (10) via a gas-tight chamber lock system (5, 6, 7, 8) or gas-tight rotary-vane feeder that moves the chopped material at a predefinable flow rate into the swelling tank (10) in a gas-tight manner.

12. Process according to Claim 1, characterized in that
the three-phase or multi-phase mixture repeatedly passes through the stage of sedimentation, or else multiple, series-connected sedimentation devices for metal and/or plastic (16, 32) are used.

13. Process according to Claims 1 and 7, characterized in that
the counterflow inside the metal sedimentation device (16) is diverted from there as a partial flow and fed into the plastic sedimentation device (38) in which suspended matter, plasticizer oils and floating impurities are on the top in a layer and are separated from the plastic particles, whereby the impurity layer is discharged from the plastic sedimentation device (38) in a partial volume flow and lifted to above the liquid level (15) of the installation and fed into a heated conveying screw (122) and then dried.

14. Process according to Claim 1 or 7, characterized in that
the mass flow conveyed into the plastic sedimentation device (38) is fed in tangentially at the bottom of the plastic sedimentation device (38) so that the liquid therein rotates and generates a secondary current, whereby the majority of the plastic particles with a density greater than that of the solvent settle on the bottom (101) of the plastic sedimentation device (38) and are discharged with the flow through a discharge pipe (125) at the bottom (101), preferably below the inflow opening, and conveyed into a conveyor (42) that lifts the plastic particles to above the liquid level (15) of the installation and feeds the plastic particles that are still wet from the swelling into a plastic shredder (58), whereas impurities such as drops of water, scraps of paper, textile fibers and other polyolefins whose densities are less than that of the solvent collect in the top of the plastic sedimentation device (38) and are removed from the plastic sedimentation device (38) by means of a conveyor screw (41), after which they are dried in the dryer (47) and transported to the outside via the chamber lock system (48, 49, 50, 51, 53).

15. Process according to Claim 1, characterized in that
dichloromethane is used as the swelling agent and/or solvent.

16. Device for the continuous utilization of plastic-coated wiring remnants and waste wire, with mechanical comminution of the wire remnants, having a swelling tank (10) with a swelling agent and/or a solvent for softening and optionally stirring the chopped material, having stirring, crushing or grinding means for the separation / disaggregation of the swollen plastic / metal composite by means of mechanical means, having gravity separators / gravity classifiers for separating the suspension consisting of solvent, plastic and metal by means of gravity separation / gravity classification, for carrying out the process according to Claim 1, characterized by
a roller cone mill (13) downstream from the swelling tank (10), a downstream mechanical double-arm agitator (14) for the mechanical separation of the metal particles from the remaining sheathing,
a downstream metal sedimentation device (16) for the gravity separation of the heavier metal particles from the plastic particles and from any dirt particles, whereby the metal particles can be removed from the metal sedimentation device (16) at the bottom thereof,
a counterflow of swelling agent and/or solvent fed into the metal sedimentation device (16) so as to expel the lighter plastic and dirt particles out of the conveying flow as well as the metal particles that are settling therein,
a downstream plastic sedimentation device (38) into which the counterflow, together with the plastic and dirt particles from the metal sedimentation device (16), can be fed as a metal-free partial flow for settling and separating the plastic particles by means of sedimentation,
whereby all parts of the device are sealed gas-tight with respect to the environment.

17. Device according to Claim 16, characterized in that
upstream from the swelling tank (10), there is a gas-tight chamber lock system consisting of slides (5, 7, 9) and at least two chamber locks (4, 6, 8) or a rotary-vane feeder, preferably with a lock container, for purposes of a defined gas-tight mass transfer of chopped material into the swelling tank (10).

18. Device according to Claim 17, characterized in that
the lower end of the swelling tank (10) is conical in shape and a conveyor screw (12) or a rotary-vane feeder is connected at this end.

19. Device according to Claim 16, characterized in that
the roller cone mill (13) consists of the housing (107) in which a milling cone (91) is arranged rotatably around an axle that can be driven by a motor, whereby mounted on the milling cone (91), there is a connecting member (92) that presses spring-loaded onto the milling cone (91) by means of springs (108) in such a way that the tip of the milling cone (91) extends into the connecting member (92).

20. Device according to Claim 19, characterized in that
the connecting member (92) consists of a ring whose outer, circumferential jacket wall (109) is supported within the housing (107) of the roller cone mill (13) in such a way that it can move up and down, whereby the inner, circumferential jacket surface (110) of the connecting member (92) has a convex curvature and, together with the conical surface of the milling cone (91), forms a circumferential gap (111) that is tapered towards the outside.

21. Device according to Claim 16, characterized in that,
below the liquid level (15) of the swelling tank (10), said tank has a bypass line (11) with a flow regulator that leads at least to the first double-arm agitator (14) for the controlled supply of swelling liquid to the double-arm agitator (14).

22. Device according to Claim 16, characterized in that
the double-arm agitator (14) consists of a cylindrical tank (113) with upper inlets (114, 116) and a preferably spiral-shaped, tapered lower outlet (124) and, inside the tank, there are curved, stationary stator arms (94) as well as an axle (115) that is rotatably arranged in the lengthwise direction of the tank (113), on which curved rotor arms (93) are attached that are capable of intermeshing between the stator arms (94) when the axle (115) rotates, whereby the rotation energy of the three-phase mixture is utilized via the outlet (124) in such a way that the double-arm agitator (14) concurrently functions as a pump.

23. Device according to Claim 16, characterized in that
the plastic sedimentation device (38) consists of a cylindrical central tank (100) having a collecting funnel (102) at the top and a funnel-shaped floor (101) at the bottom with a discharge pipe (125), whereby a feed pipe (99) opens tangentially horizontally into the central tank (100) at the lower end of the central tank (100) above the funnel-shaped floor (101), and in that there is a horizontal drain piece (103) for settled solvents that is located in the upper area of the central tank (100) tangentially to said tank.

24. Device according to Claim 23, characterized in that,
a parallel flow filter (39) is mounted on the central tank (100) through which and through a pipeline (52) connected laterally to said tank the quantity of solvent is withdrawn in a controlled manner from the system that is needed in order to maintain the effectiveness of the solvent.

25. Device according to Claim 23 or 24, characterized in that,
above the first parallel flow filter (39), there is a second parallel flow filter (40) having a laterally connected pipeline (119) that leads to an overflow tank (45) to which a siphon line (120) is connected that leads to a condensation water tank (55), whereby the second parallel flow filter (40) is positioned in such a way relative to the liquid level (15) of the installation that water with a lower density than that of the solvent floats on top of the solvent.

26. Device according to Claim 24 or 25, characterized in that,
on the second parallel flow filter (39), there is a conveyor screw (41) into which the phase boundary surface between the water-solvent extends in order to discharge the solid particles that reach the conveyor screw (41) above the liquid level (15) of the installation into a dryer system (47) to which a container (54) for waste is connected via the chambers of a chamber lock system (48, 49, 50, 51).

27. Device according to Claim 16, characterized in that,
inside the metal sedimentation device (16), a predefinable counterflow of swelling agent and/or solvent can be generated in order to suspend the lighter plastic particles and any dirt particles, and said counterflow can be fed out of the main flow as a partial flow through another outlet out of the metal sedimentation device (16), and in that below the metal sedimentation device (16), there is a metal collecting container (17) for collecting the metal particles to which a conveyor (22), preferably a conveying screw (22), is connected, which lifts the metal particles above the liquid level of the installation and conveys them for purposes of drying into a drying system (27) for the subsequent charging of the metal particles into a metal collecting container (33).

## Revendications

1. Procédé pour l'utilisation continue de résidus et de chutes de câbles recouverts de plastique,
a) les résidus de câbles étant réduits mécaniquement en petits morceaux,
b) les morceaux déchiquetés étant ramollissés dans un récipient de gonflement (10) en présence d'un agent gonflant et/ou d'un solvant en remuant le cas échéant,
c) la séparation/fragmentation du complexe plastique/métal qui a gonflé se produisant par des moyens mécaniques tels que par agitation, choc ou broyage,
d) la séparation de la suspension de solvant, plastique et métal étant effectuée par séparation par gravité/triage et,
e) les traitements ultérieurs usuels tels que le séchage, etc. s'effectuant dans un système clos pour la récupération du solvant, caractérisé en ce que
― le matériau déchiqueté gonflé selon l'étape b) est conduit à au moins un broyeur conique à cylindres (13), les gaines de plastique étant ouvertes et les âmes des câbles dessérrées, sans que les composants ne soient pulvérisés,
― la séparation/fragmentation selon l'étape c) est pratiquée au moyen d'un agitateur à deux bras et
― la séparation de la suspension selon l'étape d) est effectuée par
- un sédimentateur de métal (16) dans lequel les particules de métal lourdes descendent au fond par gravitation et se séparent des particules de plastique plus légères et des particules de saleté éventuelles et les particules de métal sont prélevées du sédimentateur de métal (16) en sa partie inférieure et la vitesse de transport du flux du mélange à trois ou plusieurs phases à l'intérieur du sédimentateur de métal (16) est choisie de manière à ce que les particules de métal descendent jusqu'au fond du sédimentateur de métal (16) en l'occurrence jusqu'à la sortie en fonction de leur vitesse de descente différente suivant leur taille, un contrecourant pouvant être prédéfini d'agent gonflant et/ou de solvant étant induit dans le flux de transport, ce contre-courant séparant les particules de plastique et de saleté plus légères du flux de transport et des particules de métal qui descendent dans ce flux, le contre-courant avec les particules de plastique et de saleté étant éconduits du sédimentateur de métal (16) comme flux partiel exempt de métal,
- et étant conduit dans un sédimentateur de plastique (38) pour la séparation et le triage des particules de plastique par sédimentation,
- toutes les étapes de ce procédé étant effectuées dans des conditions qui assurent l'étanchéité aux gaz vis-à-vis de l'extérieur.

2. Procédé selon la revendication 1, caractérisé en ce que
l'agent gonflant circulant en circuit fermé est aspiré des stations de nettoyage du métal et du plastique et/ou de séchage du métal et du plastique et est, le cas échéant, séparé au cours d'un procédé d'épuration dans une station de séparation et est ensuite de nouveau conduit dans le récipient de gonflement (10).

3. Procédé selon la revendication 1, caractérisé en ce que
au moyen d'un convoyeur (12), de préférence une vis transporteuse (12), disposé en aval de l'extrémité inférieure ou à l'extrémité inférieure du récipient de gonflement (10), est généré un courant de masse en vrac absolument continu de fragments de câbles gonflés, qui est transmis au broyeur conique à cylindres (13), le mélange gonflé en vrac ne contenant qu'autant de solvant que ne le permet l'espace libre dans la couche de matière en vrac, et que le matériau est ensuite foulé en continu dans le broyeur conique à cylindres (13).

4. Procédé selon l'une des revendications 1 ou 2, caractérisé en ce que
les particules de métal sont guidées dans un collecteur de métal (17) disposé en aval du sédimentateur de métal (16) et à partir duquel elles sont élevées par une vis transporteuse (22) au-dessus du niveau de liquide (15) de l'installation et sont ensuite séchées dans un système de séchage (27) et éconduites via un système de cloisonnement par chambres (28,29,30,31,32) dans un récipient de métal (33).

5. Procédé selon la revendication 1, caractérisé en ce que
les particules de plastique trempées, de préférence des particules de PVC, provenant du sédimentateur de plastique (38) sont élevées au-dessus du niveau de liquide (15) de l'installation, de préférence au moyen d'une vis transporteuse (42), le solvant en excès étant égoutté et qu'elles sont ensuite finement broyées, de préférence au moyen d'un défibreur de plastique (58) et ensuite séchées.

6. Procédé selon la revendication 1, caractérisé en ce que
les granulés de PVC séchés mais qui contiennent encore du solvant absorbé sont transportés au moyen d'un système de chambres d'éclusage (63,64,65) dans un récipient de désorption (66) qui est alimenté pour la désorption de préférence en air frais déshydraté, récipient à partir duquel on peut retirer les granulés de PVC désorbés.

7. Procédé selon l'une des revendications 1 ou 5, caractérisé en ce que
la quantité de solvant prévue pour le régénération, ainsi que les impuretés sont évaporées, de préférence dans une vis transporteuse de séchage à gaine chauffante (122), ce par quoi le plastifiant, le lubrifiant et d'autres substances dissoutes polymérisent sous forme d'une couche floconneuse et après quoi ces flocons de polymère sont broyés avec les particules de PVC qui peuvent être encore humides suite au gonflement, ce par quoi les flocons de polymère sont dissouts à la surface des particules de PVC et sont reconduits dans le PVC, ce par quoi la qualité du PVC recyclé obtenue correspond à la qualité du PVC d'origine.

8. Procédé selon l'une des revendications 1 ou 7, caractérisé en ce que
pour récupérer le solvant du récipient de désorption (66), une pompe à vide (37) refoule la vapeur de solvant à travers une conduite (76) dans un échangeur thermique (77) qui fonctionne à la chaleur ambiante du côté nid (eau ou air) à des températures du côté froid inférieures à 303 degrés Kelvin (inférieures à 30 degrés Celsius) et fait ainsi condenser la majeure partie du solvant contenu dans la vapeur de solvant, après quoi, le solvant liquide coule à travers les conduites (81) et (71) vers une pompe (21) et est réinduit dans le circuit, de préférence par gravité, et au flux de gaz perdu après l'échangeur thermique (77) est mélangé, à l'intérieur d'une conduite (72), le second flux de gaz perdu provenant du récipient de désorption (66).

9. Procédé selon la revendication 8, caractérisé en ce que
le gaz perdu est refoulé dans un échangeur thermique (80) qui assure un refroidissement à température basse, ce par quoi la plus grande partie de la vapeur de solvant encore contenu dans le gaz perdu condense et est réinduite dans le circuit par une conduite (81), le flux de gaz perdu est refoulé vers un échangeur thermique (84) et réchauffé par de l'air frais du côté chaud et, le cas échéant, est conduit dans un filtre d'absorption (89) afin d'extraire les derniers résidus de solvant.

10. Procédé selon la revendication 1, caractérisé en ce que
le matériau déchiqueté est conduit vers le récipient de gonflement (10) en un flux volumique défini, à l'abri de l'air.

11. Procédé selon la revendication 5, caractérisé en ce que
le matériau déchiqueté est conduit vers le récipient de gonflement (10) par un système de chambres à éclusage (5,6,7,8) étanche aux gaz ou un alimentateur à roue cellulaire étanche aux gaz qui transporte le matériau déchiqueté à un débit réglable dans des conditions d'étanchéité aux gaz dans le récipient de gonflement (10).

12. Procédé selon la revendication 1, caractérisé en ce que
le mélange à trois ou plusieurs phases parcourt à plusieurs reprises l'étape de sédimentation, ou qu'on utilise plusieurs sédimentateurs pour métal et/ou plastique (16, 38) montés en série.

13. Procédé selon les revendications 1 et 7, caractérisé en ce que
le contre-courant dans le sédimentateur pour métal (16) est éconduit de celui-ci comme un flux partiel et conduit dans le sédimentateur à plastique (38) dans lequel des matières en suspension, des huiles de plastifiants et des salissures flottantes forment une couche à la surface et sont séparées des particules de plastique, la couche de salissures étant évacuée du sédimentateur de plastique (38) en un flux volumique partiel et élevée au-dessus du niveau de liquide (15) de l'installation et convoyée vers une vis transporteuse chauffée (122) et séchée.

14. Procédé selon l'une des revendication 1 ou 7, caractérisé en ce que
le flux de masse conduit dans le sédimentateur pour plastique (38) est introduit à l'extrémité inférieure du sédimentateur pour plastique (38) de façon tangentielle, de manière à ce que le liquide tourne à l'intérieur dudit sédimentateur (38) et génère un courant secondaire, la plus grande partie des particules de plastique avec une densité supérieure à celle du solvant se déposant au fond (101) du sédimentateur pour plastique (38) et étant évacuée avec le flux par un tuyau d'évacuation (125) du fond (101), de préférence au-dessous de l'ouverture d'entrée et étant transportée vers un convoyeur (42) qui élève les particules de plastique au-dessus du niveau de liquide (15) du dispositif et transmet les particules de plastique humides suite au gonflement vers un défibreur de plastique (58) tandis que des impuretés telles que des goutte-dettes d'eau, des rognures de papier, des fibres textiles et d'autres polyoléfines à des densités inférieures à celle du solvant s'accumulent dans la partie supérieure en pointe du sédimentateur pour plastique (38) et sont évacuées du sédimentateur à plastique (38) par une vis transporteuse (41) et sont ensuite séchées dans le sécheur (47) et transportées à l'extérieur par le système de chambres d'éclusage (48,49,50,51,53).

15. Procédé selon la revendication 1, caractérisé en ce que
le dichlorométhane est utilisé comme agent gonflant et/ou solvant.

16. Dispositif pour l'utilisation continue de chutes et de résidus de câbles recouverts de plastique par réduction mécanique en petits morceaux des résidus de câbles, avec un récipient de gonflement (10) contenant un agent gonflant et/ou du solvant pour faire se ramollir les matériaux déchiquetés et éventuellement les mélanger par agitation, avec des moyens d'agitation, de choc ou de broyage pour séparer/fragmenter mécaniquement le complexe plastique/métal gonflé, avec séparateur par gravité/triage pour la séparation de la suspension de solvant, de plastique et de métal par séparation par gravité/triage, pour la mise en oeuvre du procédé selon la revendication 1, caractérisé par
un broyeur conique à cylindres (13) en aval du récipient de gonflement (10), un agitateur mécanique à deux bras (14) disposé en aval pour la séparation mécanique des particules de métal du reste des gaines,
un sédimentateur de métal (16) disposé en aval pour la séparation par gravité des particules de métal lourdes pr rapport aux particules de plastique et aux éventuelles particules de saleté, les particules de métal pouvant être prélevées du sédimentateur de métal (16) en la partie inférieure de celui-ci,
un contre-courant d'agent gonflant et/ou de solvant induit dans le sédimentateur de métal (16) pour séparer les particules de plastique et de saleté plus légères du flux de transport et des particules de métal qui descendent dans ce dernier,
un sédimentateur de plastique (38) disposé en aval dans lequel le contre-courant avec les particules de plastique et de saletés provenant du sédimentateur de métal (16) peut être introduit comme flux partiel exempt de métal pour la séparation et la sédimentation des particules de plastique,
toutes les parties du dispositif étant étanches à l'émanation des gaz vers l'extérieur.

17. Dispositif selon la revendication 16, caractérisé en ce que
en amont du récipient de gonflement (10) est disposé un système de chambres d'éclusage étanche aux gaz et consistant en vannes (5,7,9) et en au moins deux chambres d'éclusage (4,6,8) ou une roue cellulaire, de préférence avec un récipient d'éclusage pour le transfert, dans des conditions d'étanchéité aux gaz, de quantités définies de matériau déchiqueté dans le récipient de gonflement (10).

18. Dispositif selon la revendication 17, caractérisé en ce que
le récipient de gonflement (10) présente en sa partie inférieure la forme d'un cône et qu'en cette partie est raccordée une vis transporteuse (12) ou un alimentateur à roue cellulaire.

19. Dispositif selon la revendication 16, caractérisé en ce que
le broyeur conique à cylindres (13) consiste en un boîtier (107) dans lequel est disposé un cône de foulage (91) pouvant tourner autour d'un axe qui peut être entrainé par moteur, une coulisse (92) étant mise en place au-dessus du cône de foulage (91), ladite coulisse appuyant sur le cône de foulage sous la charge de ressorts (108), de sorte que la pointe du cône de foulage (91) pénètre dans la coulisse (92).

20. Dispositif selon la revendication 19, caractérisé en ce que
la coulisse (92) consiste en un anneau qui, avec sa paroi extérieure (109) faisant le pourtour, peut effectuer un mouvement de montée et de descente à l'intérieur du boîtier (107) du broyeur conique à cylindres (13), la surface intérieure de l'enveloppe (110) de la coulisse (92) faisant le pourtour ayant une forme convexe et conformant avec la surface conique du cône de foulage (91) une fente (111) qui fait le pourtour et s'amincit de plus en plus en allant vers l'extérieur.

21. Dispositif selon la revendication 16, caractérisé en ce que
au-dessous du niveau du liquide (15) du récipient de gonflement (10), une conduite en by-pass (11) avec réglage du débit est raccordée à ce dernier, qui mène au moins au premier agitateur à deux bras (14) pour l'alimentation réglée des agitateurs à deux bras (14) en agent liquide de gonflement.

22. Dispositif selon la revendication 16, caractérisé en ce que
l'agitateur à deux bras (14) consiste en un récipient cylindrique (113) avec en haut des entrées (114,116) et en bas une sortie (124) qui se termine de préférence en spirale et que, à l'intérieur du récipient, sont disposés des bras de stator courbés fixes (94), ainsi qu'un axe (115) dans le sens de la longueur du récipient (113) agencé de sorte à pouvoir tourner, auquel sont fixés des bras de rotor courbés (93), lesquels, lorsque l'axe (115) tourne, sont à même de passer à travers les bras de stator (94), l'énergie de rotation du mélange à trois phases étant utilisée à travers la sortie (124) de manière a ce que l'agitateur à deux bras (14) agisse également comme une pompe.

23. Dispositif selon la revendication 16, caractérisé en ce que
le sédimentateur pour plastique (38) consiste en un récipient cylindrique central (100) présentant en haut un entonnoir collecteur (102) et en bas un fond (101) en forme d'entonnoir avec un tuyau de sortie (125), à l'extrémité inférieure du récipient central (100) au-dessus du fond (101) en forme d'entonnoir, un tuyau d'amenée (99) disposé à l'horizontale et en tangente débouchant dans le récipient central (100) et en la partie supérieure du récipient central (100) une tubulure de sortie (103) étant disposée à l'horizontale et en tangente pour l'évacuation du solvant après sédimentation.

24. Dispositif selon la revendication 23, caractérisé en ce que
au-dessus du récipient central (100) est disposé un filtre à flux parallèle (39) à travers lequel, et aussi à travers une conduite (52) qui lui est raccordée sur le côté, est prélevée de façon régulée de l'installation la quantité de solvant qui est nécessaire pour maintenir l'efficacité du solvant.

25. Dispositif selon l'une des revendications 23 ou 24, caractérisé en ce que
au-dessus du premier filtre à flux parallèle (39) est disposé un deuxième filtre à flux parallèle (40) qui présente une conduite (119) qui lui est raccordée sur le côté et qui mène à un récipient de trop-plein (45) auquel est raccordée une conduite à siphon (120) qui mène à bâche de condensation (55), le deuxième filtre à flux parallèle (40) étant positionné par rapport au niveau de liquide (15) de l'installation de manière à ce que l'eau dont la densité est inférieure à celle du solvant flotte au-dessus du solvant.

26. Dispositif selon l'une des revendications 24 ou 25, caractérisé en ce que
sur le deuxième filtre à flux parallèle (39) est raccordée une vis transporteuse (41) dans laquelle pénètre l'interphase entre l'eau et le solvant, pour évacuer les particules de solides qui atteignent la vis transporteuse (41), au-dessus du niveau de liquide (15) de l'installation, dans un système de séchage (47) auquel est raccordé via un système de chambres d'écluses (48,49,50,51) un contenant (54) pour les déchets.

27. Dispositif selon la revendication 16, caractérisé en ce que
à l'intérieur du sédimentateur de métal (16) peut être généré un contre-courant défini d'agent gonflant et/ou de solvant qui fait flotter les particules de plastique et éventuellement les particules de saletés plus légères, ce contre-courant pouvant être extrait comme flux partiel du flux principal via une autre sortie du sédimentateur de métal (16), et que au-dessous du sédimentateur de métal (16) est placé un collecteur de métal (17) pour la collecte des particules de métal, collecteur auquel est raccordé un convoyeur (22), de préférence une vis transporteuse (22) qui élève les particules de métal au-dessus du niveau de liquide de l'installation et les transporte pour le séchage dans un système de séchage (27) pour la décharge subséquente des particules de métal dans un collecteur de métal (33).
